# EUROPEAN PATENT APPLICATION

(11) **EP 4 838 620 A1**
(43) Date of publication of application: **11.11.2026**
(21) Application number: 25839901.3
(22) Date of filing: 25.04.2025
(51) Int. Cl.: H01M 10/42, H01M 10/0525, H01M 10/058

(54) **SOLID-STATE BATTERY AND PREPARATION METHOD THEREFOR, AND ELECTRICAL DEVICE**

(30) Priority: 19.07.2024 CN 202410977819
(71) Applicant: Contemporary Amperex Technology Co., Limited, Ningde, Fujian 352100 (CN)
(72) Inventor: LIAO, Kejun, Ningde, Fujian 352100 (CN); ZENG, Zipeng, Ningde, Fujian 352100 (CN); HU, Bobing, Ningde, Fujian 352100 (CN); XUAN, Minjie, Ningde, Fujian 352100 (CN); WU, Kai, Ningde, Fujian 352100 (CN)
(74) Representative: Lorenz Seidler Gossel Part. mbB
(86) International application number: PCT/CN2025/091318
(87) International publication number: WO 2026/016580

(57) **Abstract**

The present application relates to a solid-state battery and a preparation method therefor, and an electrical device. The solid-state battery comprises a solid electrolyte layer, and a positive electrode layer and a negative electrode layer which are located on two sides of the solid electrolyte layer; an interface functional layer is provided between the solid electrolyte layer and at least one of the electrode layers; the interface functional layer between the positive electrode layer and the solid electrolyte layer is a positive electrode interface functional layer, and the interface functional layer between the negative electrode layer and the solid electrolyte layer is a negative electrode interface functional layer; the mass percentages of organic components in the positive electrode interface functional layer, the negative electrode interface functional layer, a positive electrode active material layer in the positive electrode layer, a negative electrode active material layer in the negative electrode layer, and the solid electrolyte layer are respectively denoted as fₘ₁, fₘ₂, f_{mP}, f_{mN} and f_{mE}; when the positive electrode interface functional layer is present, fₘ₁ is less than at least one of f_{mP} and f_{mE}; when the negative electrode interface functional layer is present, fₘ₂ is less than at least one of f_{mN} and f_{mE}.

## Description

### CROSS-REFERENCE TO RELATED APPLICATIONS

The present application claims priority to Chinese Patent Application No. CN2024109778197, filed on July 19, 2024 and entitled "SOLID-STATE BATTERY AND PREPARATION METHOD THEREFOR, AND ELECTRICAL DEVICE", which is incorporated herein by reference in its entirety.

### TECHNICAL FIELD

The present application relates to the technical field of solid-state batteries, and further relates to a solid-state battery and a preparation method therefor, and an electrical device.

### BACKGROUND

The statement here merely provides the background information related to the present application and does not necessarily constitute the prior art.

Solid-state batteries use non-flammable solid electrolytes to replace organic electrolytes in conventional liquid secondary batteries, such that battery safety is greatly improved, and the solid-state batteries are considered as new-generation batteries closest to industrial application. However, in the solid-state batteries, the interface compatibility is poor, resulting in unsatisfactory cycle performance of the batteries.

### SUMMARY

According to various implementations and various embodiments of the present application, the present application provides a solid-state battery and a preparation method therefor, and an electrical device. The solid-state battery has improved cycle performance.

In some implementations of a first aspect of the present application, a solid-state battery is provided, comprising a solid electrolyte layer and two electrode layers which are located on two sides of the solid electrolyte layer, wherein one electrode layer is a positive electrode layer, and the other electrode layer is a negative electrode layer; the positive electrode layer comprises a positive electrode active material layer, and the negative electrode layer comprises a negative electrode active material layer;
an interface functional layer is provided between the solid electrolyte layer and at least one of the electrode layers; the interface functional layer between the positive electrode layer and the solid electrolyte layer is a positive electrode interface functional layer, and the interface functional layer between the negative electrode layer and the solid electrolyte layer is a negative electrode interface functional layer;
the mass percentage of an organic component in the positive electrode interface functional layer is denoted as fₘ₁; the mass percentage of an organic component in the negative electrode interface functional layer is denoted as fₘ₂; the mass percentage of an organic component in the positive electrode active material layer is denoted as f_{mP}; the mass percentage of an organic component in the negative electrode active material layer is denoted as f_{mN}; and the mass percentage of an organic component in the solid electrolyte layer is denoted as f_{mE},
wherein
when the positive electrode interface functional layer is present, fₘ₁ is less than at least one of f_{mP} and f_{mE}, and
when the negative electrode interface functional layer is present, fₘ₂ is less than at least one of f_{mN} and f_{mE}.

The solid-state battery is provided with the interface functional layer between the solid electrolyte layer and at least one of the electrode layers, and the content of the organic component in the interface functional layer is lower than that in at least one of the solid electrolyte layer and the adjacent electrode active material layer. As a result, the interface functional layer has better charge transfer performance, better ion conduction and electron conduction, and high comprehensive conductivity. This can improve the interface compatibility between the electrode layer and the solid electrolyte layer and reduce interface impedance, thereby being beneficial for improving the electrochemical performance of the battery, including cycle performance. In addition, it is further beneficial for improving discharge capacity and rate performance.

In some implementations, the organic component comprises one or more of an organic binder and an organic dispersant;
the organic binder comprises one or more of polyvinylidene fluoride, styrene-butadiene rubber emulsion, carboxymethyl cellulose, sodium carboxymethyl cellulose, sodium alginate, polyvinyl alcohol, polymethylmethacrylate, hydrogenated nitrile rubber, polytetrafluoroethylene, and polyacrylic acid;
the organic dispersant comprises one or more of a cationic wetting dispersant, an anionic wetting dispersant, and an amphoteric wetting dispersant; the cationic wetting dispersant comprises one or more of an amine salt, a quaternary ammonium salt, and a pyridinium salt; the anionic wetting dispersant comprises one or more of a fatty acid salt, a sulfate ester salt, and sulfonate; and the amphoteric wetting dispersant comprises a phosphate ester salt-type high-molecular polymer.

The organic components such as the organic binder and the organic dispersant may be provided in the electrode active material layer adjacent to the interface functional layer, and the content of these organic components in the interface functional layer is controlled to be lower, such that the interface functional layer has better ion conduction and electron conduction.

By setting the content difference between the foregoing organic components in the adjacent electrode layer and the interface functional layer, it is possible to achieve both good interface contact and structural stability in the electrode layer as well as high conductivity of the interface functional layer.

In some implementations, the thickness of any interface functional layer is less than or equal to 50 µm.

In some implementations, the thickness of any interface functional layer is 1 µm to 50 µm.

Controlling the thickness of the interface functional layer within the foregoing range is beneficial for implementing better interface adhesion while improving interface compatibility and reducing interface impedance, and is beneficial for providing better structural stability for the solid-state battery.

In some implementations, the solid-state battery satisfies one or two of the following features:
the positive electrode interface functional layer is present, fₘ₁ < f_{mP} and fₘ₁ < f_{mE}; and
the negative electrode interface functional layer is present, fₘ₂ < f_{mN} and fₘ₂ < f_{mE}.

In some implementations, the conductivity of the positive electrode interface functional layer is denoted as σ₁; the conductivity of the negative electrode interface functional layer is denoted as σ₂; the conductivity of the positive electrode active material layer is denoted as σ_{P}; the conductivity of the negative electrode active material layer is denoted as σ_{N}; the conductivity of the solid electrolyte layer is denoted as σ_{E}; and
the solid-state battery satisfies one or more of the following features:
the positive electrode interface functional layer is present, and σ₁ is greater than at least one of σ_{P} and σ_{E}, optionally, when σ₁ > σ_{P}, fₘ₁ < f_{mP}, and when σ₁ > σ_{E}, fₘ₁ < f_{mE}; and
the negative electrode interface functional layer is present, and σ₂ is greater than at least one of σ_{N} and σ_{E}, optionally, when σ₂ > σ_{N}, fₘ₂ < f_{mN}, and when σ₂ > σ_{E}, fₘ₂ < f_{mE}.
In some implementations, the solid-state battery satisfies one or more of the following features:
the positive electrode interface functional layer is present, σ₁ > σ_{P} and fₘ₁ < f_{mP}, or σ₁ > σ_{E} and fₘ₁ < f_{mE};
the negative electrode interface functional layer is present, σ₂ > σ_{N} and fₘ₂ < f_{mN}, or σ₂ > σ_{E} and fₘ₂ < f_{mE};
the positive electrode interface functional layer is present, fₘ₁ < f_{mP}, fₘ₁ < f_{mE}, σ₁ > σ_{P}, and σ₁ > σ_{E}; and
the negative electrode interface functional layer is present, fₘ₂ < f_{mN}, fₘ₂ < f_{mE}, σ₂ > σ_{N}, and σ₂ > σ_{E}.

By controlling the content of the organic component in the positive electrode interface functional layer to be lower than that in the positive electrode active material layer and lower than that in the solid electrolyte layer, the positive electrode interface functional layer can provide better ion conduction and electron conduction, which is more beneficial for reducing interface impedance.

When the positive electrode interface functional layer is present, the conductivity of the positive electrode interface functional layer may be higher than the conductivity of at least one of the positive electrode active material layer and the solid electrolyte layer. Further, by regulating the content of the organic component in the positive electrode interface functional layer to be lower than that in the positive electrode active material layer and lower than that in the solid electrolyte layer, the comprehensive conductivity of the positive electrode interface functional layer may be higher than that of the positive electrode layer and higher than that of the solid electrolyte layer.

When the conductivity σ₁ of the positive electrode interface functional layer is higher than the conductivity σ_{P} of the positive electrode active material layer, the mass percentage fₘ₁ of the organic component in the positive electrode interface functional layer may be set to be lower than the mass percentage f_{mP} of the organic component in the positive electrode active material layer.

When the conductivity σ₁ of the positive electrode interface functional layer is higher than the conductivity σ_{E} of the solid electrolyte layer, the mass percentage fₘ₁ of the organic component in the positive electrode interface functional layer may be set to be lower than the mass percentage f_{mE} of the organic component in the solid electrolyte layer.

When the content of the organic component in the positive electrode interface functional layer is lower than that in the positive electrode active material layer and lower than that in the solid electrolyte layer, the positive electrode interface functional layer can provide better ion conduction and electron conduction, which is more beneficial for reducing interface impedance.

When the negative electrode interface functional layer is present, the conductivity of the negative electrode interface functional layer may be higher than the conductivity of at least one of the negative electrode active material layer and the solid electrolyte layer. Further, by regulating the content of the organic component in the negative electrode interface functional layer to be lower than that in the negative electrode active material layer and lower than that in the solid electrolyte layer, the comprehensive conductivity of the negative electrode interface functional layer may be higher than that of the negative electrode layer and higher than that of the solid electrolyte layer.

When the conductivity σ₂ of the negative electrode interface functional layer is higher than the conductivity σ_{N} of the negative electrode active material layer, the mass percentage fₘ₂ of the organic component in the negative electrode interface functional layer may be set to be lower than the mass percentage f_{mN} of the organic component in the negative electrode active material layer.

When the conductivity σ₂ of the negative electrode interface functional layer is higher than the conductivity σ_{E} of the solid electrolyte layer, the mass percentage fₘ₂ of the organic component in the negative electrode interface functional layer may be set to be lower than the mass percentage f_{mE} of the organic component in the solid electrolyte layer.

In some implementations, the interface functional layer satisfies one or two of the following features:
at least a portion of the interface functional layer is an extension region of the adjacent electrode active material layer; and
at least a portion of the interface functional layer is an extension region of the solid electrolyte layer.

When the at least a portion of the interface functional layer is the extension region of the adjacent electrode active material layer, the interface functional layer has better interface adhesion and lower interface impedance with the adjacent electrode layer under the conditions of providing better charge transfer, better ion conduction, and better electron conduction, which can significantly improve the cycle performance of the battery.

When the at least a portion of the interface functional layer is the extension region of the solid electrolyte layer, the interface functional layer has better interface adhesion and lower interface impedance with the solid electrolyte layer under the conditions of providing better charge transfer, better ion conduction, and better electron conduction, which can significantly improve the cycle performance of the battery.

When the at least a portion of the interface functional layer is the extension region of the adjacent electrode active material layer, and the at least a portion of the interface functional layer is the extension region of the solid electrolyte layer, better interface adhesion and lower interface impedance are achieved, the battery performance, at least comprising the cycle performance of the battery, can be significantly improved.

In some implementations, the interface functional layer comprises an interface layer active substance of the same type as an electrode active substance in the adjacent electrode layer, and further comprises an interface layer electrolyte material of the same type as a solid electrolyte material in the solid electrolyte layer.

By providing, in interface functional layer, the same type of electrode active substance as that in the electrode active material layer and the same type of solid electrolyte material as that in the solid electrolyte layer, the compatibility of the interface functional layer with the electrode layer and the solid electrolytic layer can be better improved, and the interface impedance between the electrode layer and the solid electrolytic layer can be reduced.

In some implementations, a staggered mating interface is provided in the interface functional layer.

The characteristic of the staggered mating interface provided in the interface functional layer can increase interface contact area, which is beneficial for improving interface connectivity and adhesion, and reducing interface impedance. This contributes to better layer-layer lamination between the electrode layer and the solid electrolyte layer, thereby further reducing the interface impedance between the electrode layer and the solid electrolyte layer.

In some implementations, any interface functional layer independently comprises a first sublayer and a second sublayer, and the second sublayer is located between the first sublayer and the solid electrolyte layer;
the first sublayer and the adjacent electrode layer comprise the same type of electrode active substance; and
the second sublayer and the solid electrolyte layer comprise the same type of solid electrolyte material.

By providing, in interface functional layer, the first sublayer containing the same type of electrode active substance as that in the electrode active material layer and the second sublayer containing the same type of solid electrolyte material as that in the solid electrolyte layer, the compatibility of the interface functional layer with the electrode layer and the solid electrolytic layer can be better improved, and the interface impedance between the electrode layer and the solid electrolytic layer can be reduced, thereby better improving the foregoing electrochemical performance of the battery.

In some implementations, the mass proportion of the electrode active substance in the first sublayer is higher than the mass proportion of the electrode active substance in the second sublayer, and the mass proportion of the solid electrolyte material in the second sublayer is higher than the mass proportion of the solid electrolyte material in the first sublayer.

By using the characteristic that the content of the electrode active substance in the first sublayer is higher than that in the second sublayer, the mass proportion of the electrode active substance sequentially decreases from the corresponding electrode layer, through the interface functional layer, to the solid electrolyte layer. By using the characteristic that the content of the solid electrolyte material in the second sublayer is higher than that in the first sublayer, the mass proportion of the solid electrolyte material sequentially increases from the solid electrolyte layer, through the interface functional layer, to the corresponding electrode layer. These characteristics are more beneficial for reducing interface impedance.

In some implementations, a staggered mating interface is provided between the first sublayer and the second sublayer.

Allowing the first sublayer and the second sublayer to have a staggered mating contact interface can increase interface contact area, which is beneficial for improving interface connectivity and adhesion, and reducing interface impedance. This contributes to better layer-layer lamination between the electrode layer and the solid electrolyte layer, thereby further reducing the interface impedance between the electrode layer and the solid electrolyte layer. As a result, the foregoing electrochemical performance of the battery can be improved, including cycle performance, as well as discharge capacity and rate performance.

In some implementations, at least one of the positive electrode active material layer and the negative electrode active material layer comprises an organic component; and
the density of the solid electrolyte layer is denoted as K_{E}, satisfying K_{E} ≥ 90%.

In some implementations, K_{E} ≥ 97%.

When the solid electrolyte layer is prepared by using the positive electrode layer or the negative electrode layer as a substrate layer, by controlling the positive electrode active material layer or the negative electrode active material layer to contain the organic component, the organic binder can be removed by surface treatment to form exhaust microchannels, which is beneficial for improving the density during subsequent compressing (such as warm isostatic pressing treatment), thereby significantly improving the interface impedance in the solid electrolyte layer, and thereby being beneficial for improving the foregoing electrochemical performance of the battery.

In some implementations, the solid electrolyte layer comprises an electrolyte organic component, and the solid-state battery satisfies at least one of the following features:
(b1) the density of the positive electrode active material layer is denoted as K_{P}, satisfying K_{P} ≥ 90%, and
(b2) the density of the negative electrode active material layer is denoted as K_{N}, satisfying K_{N} ≥ 90%.

In some implementations, the solid-state battery satisfies at least one of the following features:
${K}_{P} \geq 97 % ;$ and
${K}_{N} \geq 97 % .$

When the positive electrode layer or the negative electrode layer is prepared by using the solid electrolyte layer as a substrate layer, by controlling the solid electrolyte layer to contain the organic component, the organic binder can be removed by surface treatment to form exhaust microchannels, which is beneficial for improving the density during subsequent compressing (such as warm isostatic pressing treatment), thereby significantly improving the interface impedance in the positive electrode layer or the negative electrode layer, and thereby being beneficial for improving the foregoing electrochemical performance of the battery.

In some implementations, the solid-state battery is an all-solid-state battery.

According to a second aspect of the present application, a plurality of preparation methods for a solid-state battery are provided.

In some implementations, a preparation method for a solid-state battery is provided, comprising the following steps:
performing etching treatment on an initial negative electrode active layer located on at least one side surface of a negative electrode sheet to form a negative electrode rough surface having negative electrode concave portions, the negative electrode sheet after the etching treatment comprising negative electrode convex portions corresponding to the negative electrode concave portions, wherein the initial negative electrode active layer comprises a degradable organic component, and after the etching treatment, the content of the degradable organic component in the negative electrode convex portion decreases,
providing an electrolyte pre-coating layer on the negative electrode rough surface, and compressing the electrolyte pre-coating layer, thereby allowing the negative electrode convex portions and the portions of the electrolyte pre-coating layer filled in the corresponding negative electrode concave portions to jointly form a negative electrode interface functional layer, and allowing the remaining portion of the electrolyte pre-coating layer to form a solid electrolyte layer; and
forming a positive electrode layer on one side surface that is of the solid electrolyte layer and that is away from the negative electrode interface functional layer.

The solid electrolyte layer and the positive electrode layer may be sequentially prepared on the negative electrode sheet with the initial negative electrode active layer containing the degradable organic component, and the degradable organic component is partially or completely removed by performing the etching treatment on the initial negative electrode active layer located on the surface of the negative electrode sheet, such that the content of the organic component decreases. On the one hand, the content of an inorganic component in an etched region on the surface of the negative electrode may increase with the decrease of the content of the organic component, thereby improving the conductivity of the surface of the negative electrode, reducing interface impedance, and improving the electrochemical performance of the battery, comprising cycle performance and the like. In addition, it is further beneficial for improving discharge capacity and rate performance. On the other hand, the negative electrode rough surface having the negative electrode concave portions can be formed on the surface of a negative electrode. When the solid electrolyte layer is further prepared, microchannels capable be exhausting gas can be formed between the formed solid electrolyte layer and the negative electrode rough surface, and during subsequent compressing (such as warm isostatic pressing treatment), these microchannels can be used to exhaust gas, thereby improving the degree of compaction of the solid electrolyte layer and improving the density of the formed solid electrolyte layer. In addition, the negative electrode rough surface can further increase contact area with the solid electrolyte layer, which is further beneficial for reducing interface impedance, thereby improving the battery performance, at least comprising the cycle performance of the battery.

In some implementations, when the solid electrolyte layer is formed based on the negative electrode sheet after etching treatment, the density of the solid electrolyte layer is denoted as K_{E}, satisfying K_{E} ≥ 90%, and an etching depth is 1 µm to 50 µm.

In some implementations, K_{E} ≥ 97%, and the etching depth is 3 µm to 40 µm.

By controlling the etching depth of the negative electrode sheet, the roughness of the negative electrode rough surface can be adjusted, such that the exhaust microchannel has a suitable size, and the solid electrolyte layer formed based on the negative electrode sheet after etching treatment has a higher density. In addition, the materials at the interface can be more sufficiently engaged with each other, which is also beneficial for improving the density of the solid electrolyte layer. Controlling the etching depth to be 3 µm to 40 µm is more beneficial for providing exhaust microchannels of the suitable size and promoting more fully mutual engagement of the interface materials, and is more beneficial for improving the density of the solid electrolyte layer.

In some implementations, a preparation method for a solid-state battery is provided, comprising the following steps:
performing etching treatment on an initial positive electrode active layer located on at least one side surface of a positive electrode sheet to form a positive electrode rough surface having positive electrode concave portions, the positive electrode sheet after the etching treatment comprising positive electrode convex portions corresponding to the positive electrode concave portions, wherein the initial positive electrode active layer comprises a degradable organic component, and after the etching treatment, the content of the degradable organic component in the positive electrode convex portion decreases,
providing an electrolyte pre-coating layer on the positive electrode rough surface, and compressing the electrolyte pre-coating layer, thereby allowing the positive electrode convex portions and the portions of the electrolyte pre-coating layer filled in the corresponding positive electrode concave portions to jointly form a positive electrode interface functional layer, and allowing the remaining portion of the electrolyte pre-coating layer to form a solid electrolyte layer; and
forming a negative electrode layer on one side surface that is of the solid electrolyte layer and that is away from the positive electrode interface functional layer.

The solid electrolyte layer and the positive electrode layer may be sequentially prepared on the positive electrode sheet with the initial positive electrode active layer containing the degradable organic component, and the degradable organic component is partially or completely removed by performing the etching treatment on the initial positive electrode active layer located on the surface of the positive electrode sheet, such that the content of the organic component decreases. On the one hand, the content of an inorganic component in an etched region on the surface of the positive electrode may increase with the decrease of the content of the organic component, thereby improving the conductivity of the surface of the positive electrode, reducing interface impedance, and improving the electrochemical performance of the battery, comprising cycle performance and the like. In addition, it is further beneficial for improving discharge capacity and rate performance. On the other hand, the positive electrode rough surface having the positive electrode concave portions can be formed on the surface of the positive electrode. When the solid electrolyte layer is further prepared, microchannels capable of exhausting gas can be formed between the formed solid electrolyte layer and the positive electrode rough surface, and during subsequent compressing (such as warm isostatic pressing treatment), these microchannels can be used to exhaust gas, thereby improving the degree of compaction of the solid electrolyte layer and improving the density of the formed solid electrolyte layer. In addition, the positive electrode rough surface can further increase contact area with the solid electrolyte layer, which is further beneficial for reducing interface impedance, thereby improving the battery performance, at least comprising the cycle performance of the battery.

In some implementations, when the solid electrolyte layer is formed based on the positive electrode sheet after etching treatment, the density of the solid electrolyte layer is denoted as K_{E}, satisfying K_{E} ≥ 90%, and an etching depth is 1 µm to 50 µm.

In some implementations, K_{E} ≥ 97%, and the etching depth is 3 µm to 40 µm.

By controlling the etching depth of the positive electrode sheet, the roughness of the positive electrode rough surface can be adjusted, such that the exhaust microchannel has a suitable size, and the solid electrolyte layer formed based on the positive electrode sheet after etching treatment has a higher density. In addition, the materials at the interface can be more sufficiently engaged with each other, which is also beneficial for improving the density of the solid electrolyte layer. Controlling the etching depth to be 3 µm to 40 µm is more beneficial for providing exhaust microchannels of the suitable size and promoting more fully mutual engagement of the interface materials, and is more beneficial for improving the density of the solid electrolyte layer.

In some implementations, a preparation method for a solid-state battery is provided, comprising the following steps:
providing a solid electrolyte film comprising a first surface and a second surface facing away from each other, wherein the solid electrolyte film comprises a degradable organic component;
performing etching treatment on the first surface of the solid electrolyte film to form a first rough surface having first concave portions, the solid electrolyte film after the etching treatment comprising first convex portions corresponding to the first concave portions, and after the etching treatment, the content of the degradable organic component in the first convex portion decreasing;
providing a first electrode pre-coating layer on the first surface of the solid electrolyte film after the etching treatment, and compressing the first electrode pre-coating layer, thereby allowing the first convex portions and the portions of the first electrode pre-coating layer filled in the corresponding first concave portions to jointly form a first interface functional layer, and allowing the remaining portion of the first electrode pre-coating layer to form a first electrode layer; and
forming a second electrode layer on the second surface of the solid electrolyte film.

Two electrode layers may be sequentially prepared on the solid electrolyte film containing the degradable organic component, and the degradable organic component is partially or completely removed by performing etching treatment on the surface of the solid electrolyte film, such that the content of the organic component decreases. On the one hand, the content of an inorganic component in an etched region on the surface of the solid electrolyte film may increase with the decrease of the content of the organic component, thereby improving the conductivity of the surface of the solid electrolyte film, reducing interface impedance, and improving the electrochemical performance of the battery, comprising cycle performance and the like. In addition, it is further beneficial for improving discharge capacity and rate performance. On the other hand, the first rough surface having the concave portions may be formed on the surface of the solid electrolyte film. When the first electrode layer is further prepared, microchannels capable of exhausting gas may be formed between the formed first electrode layer and the first rough surface, and during subsequent compressing (such as warm isostatic pressing treatment), these microchannels may be used to exhaust gas, thereby improving the degree of compactness of the first electrode layer and improving the density of the formed first electrode layer. In addition, the first rough surface may further increase contact area with the first electrode layer, which is further beneficial for reducing interface impedance, thereby improving the battery performance, at least comprising the cycle performance of the battery.

In some implementations, forming the second electrode layer on the second surface of the solid electrolyte film comprises the following steps:
performing etching treatment on the second surface of the solid electrolyte film to form a second rough surface having second concave portions, the solid electrolyte film after the etching treatment comprising second convex portions corresponding to the second concave portions, and after the etching treatment, the content of the degradable organic component in the second convex portion decreasing; and
providing a second electrode pre-coating layer on the second surface of the solid electrolyte film after the etching treatment, and compressing the second electrode pre-coating layer, thereby allowing the second convex portions and the portions of the second electrode pre-coating layer filled in the corresponding second concave portions to jointly form a second interface functional layer, and allowing the remaining portion of the second electrode pre-coating layer to form the second electrode layer.

When the second electrode is formed on the other side of the solid electrolyte film, etching treatment may also be performed on the surface of the solid electrolyte film to decrease the content of the degradable organic component in an etched region and form the second rough surface, thereby improving the conductivity of the surface of the solid electrolyte film, reducing interface impedance, and forming microchannels capable of exhausting gas between the formed second electrode layer and the second rough surface. During subsequent compressing (such as warm isostatic pressing treatment), these microchannels can be used to exhaust gas, thereby improving the degree of compactness of the second electrode layer and improving the density of the formed second electrode layer. In addition, the second rough surface can further increase contact area with the second electrode layer, which is further beneficial for reducing interface impedance, thereby improving the battery performance, at least comprising the cycle performance of the battery.

In some implementations, the first electrode layer is a positive electrode layer, or the first electrode layer is a negative electrode layer.

Based on the solid electrolyte film, the positive electrode layer may be formed first, or the negative electrode layer may be formed first.

In some implementations, before the positive electrode layer is formed, etching treatment is performed on one side surface that is of the solid electrolyte film and that is close to the positive electrode layer; and the density of the positive electrode layer is denoted as K_{P}, satisfying K_{P} ≥ 90%, and an etching depth is 1 µm to 50 µm.

In some implementations, K_{P} ≥ 97%, and the etching depth is 3 µm to 40 µm.

Controlling the etching depth of the solid electrolyte layer can adjust the density of the positive electrode layer formed based on the solid electrolyte film after the etching treatment.

In some implementations, before the negative electrode layer is formed, etching treatment is performed on one side surface that is of the solid electrolyte film and that is close to the negative electrode layer; and the density of the negative electrode layer is denoted as K_{N}, satisfying K_{N} ≥ 90%, and an etching depth is 1 µm to 50 µm.

In some implementations, K_{N} ≥ 97%, and an etching depth is 3 µm to 40 µm.

Controlling the etching depth of the solid electrolyte layer can adjust the density of the negative electrode layer formed based on the solid electrolyte film after the etching treatment.

In some implementations, etching manners for the etching treatment comprise one or more of plasma treatment and laser treatment.

According to a third aspect of the present application, an electrical device is provided, comprising at least one of the solid-state battery according to the first aspect of the present application and the solid-state battery prepared by the preparation method for a solid-state battery according to the second aspect of the present application.

Details of one or more implementations or embodiments of the present application are set forth in the accompanying drawings and the description below. Other features, objectives, and advantages of the present application will be apparent from the specification, and the accompanying drawings, and the claims.

### BRIEF DESCRIPTION OF THE DRAWINGS

To better describe and illustrate the implementations, embodiments, or examples according to the present application, reference can be made to one or more accompanying drawings. Additional details or examples used to describe the accompanying drawings should not be considered as limiting the scope of any of the disclosed application, the currently described implementations, embodiments, or examples, and best modes of these applications as currently understood. Moreover, the same reference numerals are used to denote the same components throughout the accompanying drawings. It should also be noted that the accompanying drawings are all drawn in a simplified form and are only used to conveniently and clearly assist in describing the present application. The various dimensions of each component shown in the drawings are arbitrarily shown, and may be accurate or not drawn to actual scale. For example, the dimensions of components in the drawings are appropriately exaggerated to make the illustration clearer. Unless otherwise specified, the components in the drawings are not necessarily drawn to scale. The present application does not limit the dimensions of each component. Like reference numerals refer to like portions in the following description.

In the accompanying drawings:
FIG. 1 is a schematic diagram of a structure of a solid-state cell according to an embodiment of the present application, where an interface functional layer is provided between a solid electrolyte layer and an electrode layer on one side of the solid electrolyte layer;
FIG. 2 is a schematic diagram of a structure of a solid-state cell according to an embodiment of the present application, where a positive electrode interface functional layer is provided between a solid electrolyte layer and a positive electrode layer;
FIG. 3 is a schematic diagram of a structure of a solid-state cell according to an embodiment of the present application, where a negative electrode interface functional layer is provided between a solid electrolyte layer and a negative electrode layer;
FIG. 4 is a schematic diagram of a structure of a solid-state cell according to an embodiment of the present application, where an interface functional layer is provided between a solid electrolyte layer and each of a positive electrode layer and a negative electrode layer, that is, both a positive electrode interface functional layer and a negative electrode interface functional layer are provided;
FIG. 5 is a schematic diagram of a structure of a solid-state cell according to an embodiment of the present application, where a negative electrode interface functional layer is provided between a solid electrolyte layer and a negative electrode layer, the interface functional layer includes a first sublayer and a second sublayer, the first sublayer is in contact with the negative electrode layer, the second sublayer is in contact with the solid electrolyte layer, and in this case, the second sublayer is located between the first sublayer and the solid electrolyte layer;
FIG. 6 is a schematic diagram of a structure of a solid-state cell according to an embodiment of the present application, where a positive electrode interface functional layer is provided between a solid electrolyte layer and a positive electrode layer, the interface functional layer includes a first sublayer and a second sublayer, the first sublayer is in contact with the positive electrode layer, the second sublayer is in contact with the solid electrolyte layer, and in this case, the second sublayer is located between the first sublayer and the solid electrolyte layer;
FIG. 7 is a schematic diagram of a structure of an electrode sheet according to an embodiment of the present application, where the electrode sheet includes a current collector and an initial electrode active layer;
FIG. 8 is a flowchart of a preparation method for a solid-state battery according to an embodiment of the present application;
FIG. 9 is a schematic diagram of a solid-state battery cell according to an implementation of the present application;
FIG. 10 is an exploded view of the solid-state battery cell shown in FIG. 9 according to an implementation of the present application;
FIG. 11 is a schematic diagram of a battery module according to an implementation of the present application;
FIG. 12 is a schematic diagram of a battery pack according to an implementation of the present application;
FIG. 13 is an exploded view of the battery pack shown in FIG. 12 according to an implementation of the present application; and
FIG. 14 is a schematic diagram of an electrical device using a solid-state battery as a power supply according to an implementation of the present application.

### Description of reference signs:

120: electrode layer; 22: interface functional layer; 222: positive electrode interface functional layer; 223: negative electrode interface functional layer; 201: first sublayer; 202: second sublayer; 200: positive electrode layer; 100: solid electrolyte layer; 300: negative electrode layer; 12: electrode sheet; 121: current collector; 122: initial electrode active layer; 30: negative electrode sheet; 310: current collector; 32: initial negative electrode active layer; 320: negative electrode active material layer; 330: negative electrode convex portion; 332: negative electrode concave portion; 110: electrolyte pre-coating layer; 1: battery pack; 2: upper case; 3: lower case; 4: battery module; 5: solid-state battery cell; 51: housing; 52: solid-state cell; 53: cover plate; 6: electrical device.

### DETAILED DESCRIPTION OF PREFERRED EMBODIMENTS

Hereinafter, some implementations where a solid-state battery and a preparation method therefor, and an electrical device provided by the present application are described in detail appropriately with reference to the drawings. However, an unnecessary detailed description may be omitted. For example, a detailed description of well-known matters and repeated descriptions of a substantially same structure may be omitted. This is to avoid the following descriptions from becoming unnecessarily redundant and to facilitate understanding by those skilled in the art. The accompanying drawings and the following descriptions are provided for those skilled in the art to fully understand the present application, and are not intended to limit the subject matter described in the claims.

The "range" disclosed in the present application is limited in the form of a lower limit and an upper limit. A given range is limited by selecting a lower limit and an upper limit, which define the boundaries of the specific range. A range defined in this manner may include an end value or may not include an end value, any end value may be independently included or not included, and may be any combination, that is, any lower limit may be combined with any upper limit to form a range. For example, if the ranges of 60-120 and 80-110 are listed for a specific parameter, it is understood that the ranges of 60-110 and 80-120 are also expected. Furthermore, if the smallest range values 1 and 2 are listed, and if the largest range values 3, 4 and 5 are listed, the following ranges may all be expected: 1 to 3, 1 to 4, 1 to 5, 2 to 3, 2 to 4, and 2 to 5. In the present application, unless otherwise stated, a numerical range "a to b" represents a shorthand representation for a combination of any real numbers between a and b, where both a and b are real numbers. For example, the numerical range of "0 to 5" represents that all real numbers between "0 to 5" have been listed herein, and "0 to 5" is only a shortened representation of these numerical combinations. In addition, when a parameter is expressed as an integer≥2, it is equivalent to listing that the parameter is an integer such as 2, 3, 4, 5, 6, 7, 8, 9, 10, 11, or 12. For example, when a parameter is expressed as an integer sleeted from "2 to 10", it is equivalent to listing integers 2, 3, 4, 5, 6, 7, 8, 9, and 10.

In the present application, the term "numerical value", unless otherwise specified, includes this number and a reasonable approximation thereof, and the definition of "numerical value" may be applied to discrete numerical points and may also be applied to the endpoints of a numerical range. Unless otherwise specified, the term "approximation" covers a numerical interval based on the reasonable fluctuation range of this number, and the reasonable fluctuation range may vary depending on the type and numerical value of this number. The reasonable fluctuation range may be reasonably confirmed based on the accuracy of a test or measurement manner. Therefore, for a numerical value or a numerical range, unless otherwise specified, it should be understood that the numerical value covers the reasonable approximation thereof, and the numerical range covers reasonable approximations of two endpoints. A person skilled in the art may understand that the acceptable fluctuation ranges of the relevant approximations can be included in the definition of the numerical value or the numerical range. In the present application, unless otherwise specified, "N1" may be reasonably understood as "about N1", and "N1 to N2" may be reasonably understood as "about N1 to about N2", where N1 and N2 are two unequal numerical values. For example, in some cases, due to one or more factors such as reasonable deviation allowed in the art, and instrument control accuracy, it is reasonable to bring approximations within an approximation range into a range defined by the numerical range. For example, "the temperature of 20°C to 30°C" may be understood as "about 20°C to about 30°C". Further, taking an endpoint of "20°C" with approximations of ± 1°C as an example, approximation values such as 19°C and 19.5°C that fall within an approximation range corresponding to "about 20°C" should also be included in a range indicated by 20°C to 30°C.

In the present application, unless otherwise specified, "about" means within a reasonable range above and below this number, and the fluctuation range may vary depending on the type and numerical value of this number. For example, the range of ± 10%, ± 5%, ± 2%, ± 1%, or the like may be permitted. For example, taking "about 20°C" with approximations of ± 1°C as an example, approximation values such as 19°C and 19.5°C that fall within an approximation range indicated by "about 20°C" should also be included in a range indicated by "about 20°C".

Unless otherwise defined, "a plurality of", "multiple", "a plurality of items", "several", and the like involved in the present application mean the quantity of two or more. For example, "one or more" means one or ≥ (greater than or equal to) two It can be understood that "any of a plurality of" items refers to any suitable combination of a plurality of items, that is, the combination of "any of a plurality of " items is performed in a manner that does not conflict and can implement the present application.

Unless otherwise specified, all implementations and optional implementations of the present application may be combined with each other to form new technical solutions.

The "embodiment" mentioned herein means that a particular feature, structure, or characteristic described with reference to the embodiment may be included in at least one embodiment or implementation of the present application. The phrase in various places in the description does not necessarily all refer to the same embodiment, or a separate or alternative embodiment mutually exclusive of other embodiments. It is explicitly and implicitly understood by a person skilled in the art that the embodiments described herein may be combined with other embodiments. The "implementation" mentioned herein has a similar understanding.

Those skilled in the art may understand that, in the method of each implementation or embodiment, a writing order of each step does not mean a strict execution order to constitute any limitation on an implementation process, and a detailed execution order of each step should be determined by its function and possible internal logic. Unless otherwise specified, all steps in the present application may be performed sequentially or randomly, preferably sequentially. For example, a method M including steps (a) and (b) represents that the method may include sequentially performed steps (a) and (b), or sequentially performed steps (b) and (a). For example, mentioning that the method M may further include step (c) represents that step (c) may be added to the method M in any order. For example, the method M may include steps (a), (b), and (c), or steps (a), (c), and (b), or steps (c), (a), and (b), or the like.

In the present application, in open technical features or technical solutions described by the words such as "contain", "include", and "comprise", unless otherwise specified, additional members other than the listed members are not excluded, and it may be considered that both closed features or solutions composed of the listed members and open features or solutions further including additional members in addition to the listed members are provided. For example, a includes a1, a2, and a3, and may further include another member or may not include an additional member unless otherwise specified, and it may be considered that both a feature or solution in which "a is composed of a1, a2, and a3" or "a is selected from a1, a2, and a3" and a feature or solution in which "a includes not only a1, a2, and a3 but also another member" are provided.

In the present application, unless otherwise specified, M (for example, m1) means that m1 is a non-limiting example of M, and it may be understood that M is not limited to m1.

In the present application, "optionally", "optional", and "option" mean that there is or not, that is, mean any one of two parallel solutions: "with" or "without". If "option" occurs repeatedly in a technical solution, each "option" is independent, unless otherwise specified without inconsistency or mutual restriction. Unless otherwise specified, in the present application, descriptions such as "optionally include" and "optionally contain" are used, and "optionally include" is used as an example to indicate "may include or not include".

In the present application, unless otherwise specified, a feature or solution corresponding to "and/or" includes any one of two or more related listed items, and also includes any and all combinations of the related listed items, where the any and all combinations include any two related listed items, any more related listed items, or all related listed items. For example, "M and/or N" represents a group consisting of M, N, and "a combination of M and N". Herein, "including M and/or N" may mean "including M, including N, and including M and N", and may alternatively mean "including M, including N, or including M and N", which can be properly understood according to the sentence in which it is used.

As used herein, "a combination thereof", "any combination thereof", "any combination mode thereof," and the like includes all suitable combination modes of any two or more of listed items.

Herein, "suitable" in "suitable combination mode", "suitable mode", "any suitable mode", and the like allows that the technical solution of the present application can be implemented.

Herein, the terms "preferred", "better", "optimal", "appropriate", "good", and "comparatively good" are merely used to describe preferred implementations or embodiments, and should not be construed to limit the scope of the present application. If "preferred" occurs repeatedly in a technical solution, each "preferred" is independent, unless otherwise specified without inconsistency or mutual restriction.

In the present application, the terms "further", "even further", "particularly", "for example", "such as", "example", and "illustrative", and the like are used for descriptive purposes to indicate differences in content, but should not be construed to limit the scope of the present application.

In the present application, in "first aspect", "second aspect", "third aspect", and the like, terms "first", "second", "third", and the like are used merely for descriptive purposes, and should not be construed as indicating or implying relative importance or number, nor as implicitly indicating the importance or quantity of technical features indicated. Also, "first", "second", "third", and the like are used merely for the purpose of describing a non-exhaustive list, and it should be understood that they do not constitute a closed limitation on the quantity.

In the present application, unless otherwise specified and limited, a first feature being "above" or "below" a second feature may be that the first feature is in direct contact with the second feature, or the first feature is in indirect contact with the second feature through an intermediate medium. In the present application, unless otherwise specified and limited, the first feature "above" or "below" the second feature may represent a mutual positional relationship in terms of horizontal level, or may merely represent that there is an attachment relationship without limiting the mutual positional relationship in terms of horizontal level.

In the present application, the term "room temperature" generally refers to 4°C to 35°C, and may refer to 20°C ±5°C. In some implementations or embodiments of the present application, room temperature refers to 20°C to 30°C.

In the present application, when the unit of a data range is related, the unit of a left end point and the unit of a right end point are the same if the unit is attached only after the right end point. For example, 3~5 h or 3-5 h each means that the unit of the left end point "3" and the unit of the right end point "5" are both h (hour), which has the same meaning as 3h to 5h. In addition, the similar description of other parameters such as temperature and dimension is also understood in a same manner.

The weight or mass of a relevant component mentioned in the implementations or embodiments of the present application may not only indicate a content of each component, but also indicate a proportional relationship between the weights or masses of components. Therefore, it is within the scope of the present application to scale up or down the content of the relevant component according to the implementations or embodiments of the present application. Further, the mass involved in the implementations or embodiments of the present application may be a mass unit well-known in the chemical industry such as microgram (µg), milligram (mg), gram (g), and kilogram (kg). Unless otherwise specified, the mass ratio is equal to the corresponding weight ratio. For example, if the substance A has a mass of m1 and a weight of W1, and the substance B has a mass of m2 and a weight of W2, then the mass ratio m1/m2 of the two substances is numerically equal to the corresponding weight ratio W1/W2.

In the present application, unless otherwise specified, wt% represents a weight percentage by weight, which is equal to a corresponding mass percentage by mass in value. In the present application, the weight percentages denoted as "0" and "0 wt%" have the same meaning and can be used interchangeably.

In the present application, "greater than and equal to", "greater than or equal to", and "≥" have the same meaning and can be used interchangeably; "less than and equal to", "less than or equal to", and "≤" have the same meaning and can be used interchangeably; and "greater than" can be equivalently expressed as ">", and "less than" can be equivalently expressed as "<". In the present application, unless otherwise specified, "greater than or equal to" and "≥" may be considered as further providing two solutions of "greater than" and "equal to". In the present application, unless otherwise specified, "less than or equal to" and "≤" may be considered as further providing two solutions of "less than" and "equal to".

In the present application, exemplary descriptions related to "in some implementations (or embodiments)", "in one implementation (or embodiment)", and the like may cover but are not limited to the following meanings: these solutions may be combined with other solutions in a suitable manner to form a new technical solution.

Improvement in effects described in any portion of the context of the present application is not intended to be limited by any theory.

In a conventional solid-state battery, generally, poor interface compatibility between a solid electrolyte layer and an electrode layer (a positive electrode layer and/or a negative electrode layer) results in poor interface adhesion, leading to an increase in battery impedance, and even causing delamination between structural layers, thereby causing unsatisfactory performance (such as cycle performance) of the battery.

According to various implementations and various embodiments of the present application, the present application at least provides a solid-state battery and a preparation method therefor, and an electrical device. The solid-state battery has improved cycle performance.

In some implementations, the solid-state battery includes a solid electrolyte layer, and a positive electrode layer and a negative electrode layer which are located on two sides of the solid electrolyte layer; an interface functional layer is provided between the solid electrolyte layer and at least one of the electrode layers; the interface functional layer between the positive electrode layer and the solid electrolyte layer is a positive electrode interface functional layer, and the interface functional layer between the negative electrode layer and the solid electrolyte layer is a negative electrode interface functional layer; the mass percentages of organic components in the positive electrode interface functional layer, the negative electrode interface functional layer, a positive electrode active material layer in the positive electrode layer, a negative electrode active material layer in the negative electrode layer, and the solid electrolyte layer are respectively denoted as fₘ₁, fₘ₂, f_{mP}, f_{mN} and f_{mE}; where when the positive electrode interface functional layer is present, fₘ₁ is less than at least one of f_{mP} and f_{mE}; when the negative electrode interface functional layer is present, fₘ₂ is less than at least one of f_{mN} and f_{mE}. The solid-state battery has improved cycle performance.

In the present application, unless otherwise specified, the "solid-state battery" provided in the present application refers to a battery in which the electrolytes include a solid electrolyte. Generally, the solid-state battery includes a positive electrode layer, a solid electrolyte layer, and a negative electrode layer. During charging and discharging of the battery, active ions are intercalated and deintercalated back and forth between the positive electrode layer and the negative electrode layer. The solid electrolyte layer serves to conduct ions between the positive electrode layer and the negative electrode layer, and can further serve to isolate the positive electrode layer from the negative electrode layer, thereby preventing a short circuit between positive and negative electrodes. Therefore, the solid-state battery may not require a separator in a conventional lithium-ion battery. The solid-state battery uses a non-flammable solid electrolyte to replace an organic electrolyte in the conventional liquid lithium-ion battery, such that battery safety is greatly improved. In addition to improving the safety, the solid-state battery can be better adapted to positive and negative electrode materials with high energy density, and reduce the weight of the system, which is beneficial for improving energy density.

In the present application, unless otherwise specified, the "solid electrolyte" refers to an electrolyte material or an electrolyte substance that is present in a solid form during storage and preparation of the solid-state battery and components constituting the solid-state battery and during operation of the solid-state battery. It may be understood that the solid electrolyte is present in a solid state at room temperature, but is not limited thereto.

In the present application, unless otherwise specified, the "electrode layer" includes an electrode active substance. The electrode layer may be a positive electrode layer or a negative electrode layer, and the "electrode active substance" in the electrode layer refers to a substance capable of reversibly intercalating and deintercalating active ions. Unless otherwise specified, the "negative electrode active substance" refers to a substance used in the negative electrode layer and capable of reversibly intercalating and deintercalating active ions; and the "positive electrode active substance" refers to a substance used in the positive electrode layer and capable of reversibly deintercalating and intercalating active ions. When the solid-state battery is charged, the active ions are deintercalated from the positive electrode and intercalated into the negative electrode through the solid electrolyte layer. When the solid-state battery is discharged, the active ions are deintercalated from the negative electrode and intercalated into the positive electrode. The active ions are not particularly limited. Without limitation, the active ions may be lithium ions, which correspond to a lithium-ion solid-state battery.

In the present application, unless otherwise specified, the "electrode active material layer" includes at least one of the positive electrode active material layer in the positive electrode layer and the negative electrode active material layer in the negative electrode layer, and the electrode active material layer may refer to the positive electrode active material layer or the negative electrode active material layer based on the detailed circumstances. It can be understood that the positive electrode active material layer contains a positive electrode active material, and the negative electrode active material layer contains a negative electrode active material.

In some implementations of a first aspect of the present application, a solid-state battery is provided, including a solid electrolyte layer and two electrode layers which are located on two sides of the solid electrolyte layer, where one electrode layer is a positive electrode layer, and the other electrode layer is a negative electrode layer; the positive electrode layer includes a positive electrode active material layer, and the negative electrode layer includes a negative electrode active material layer;
an interface functional layer is provided between the solid electrolyte layer and at least one of the electrode layers; the interface functional layer between the positive electrode layer and the solid electrolyte layer is a positive electrode interface functional layer, and the interface functional layer between the negative electrode layer and the solid electrolyte layer is a negative electrode interface functional layer;
the mass percentage of an organic component in the positive electrode interface functional layer is denoted as fₘ₁; the mass percentage of an organic component in the negative electrode interface functional layer is denoted as fₘ₂; the mass percentage of an organic component in the positive electrode active material layer is denoted as f_{mP}; the mass percentage of an organic component in the negative electrode active material layer is denoted as f_{mN}; and the mass percentage of an organic component in the solid electrolyte layer is denoted as f_{mE},
where
when the positive electrode interface functional layer is present, fₘ₁ is less than at least one of f_{mP} and f_{mE};
when the negative electrode interface functional layer is present, fₘ₂ is less than at least one of f_{mN} and f_{mE}.

In the present application, the "organic component" has the meaning known in the art, which has a carbon-containing framework. The "Inorganic component" also has the meaning known in the art, which does not have a carbon-containing framework.

In the present application, unless otherwise specified, the following substances are classified as the "organic component": an organic binder, an organic dispersant, and the like. Non-limiting examples of the organic binder includes one or more of polyvinylidene fluoride, styrene-butadiene rubber emulsion, carboxymethyl cellulose, sodium carboxymethyl cellulose, sodium alginate, polyvinyl alcohol, polymethylmethacrylate, hydrogenated nitrile rubber, polytetrafluoroethylene, polyacrylic acid, and the like. Non-limiting examples of the organic dispersant may include one or more of a cationic wetting dispersant, an anionic wetting dispersant, and an amphoteric wetting dispersant, where the cationic wetting dispersant may include, but is not limited to, one or more of an amine salt, a quaternary ammonium salt, and a pyridinium salt; the anionic wetting dispersant may include, but is not limited to, one or more of a fatty acid salt, a sulfate ester salt, and sulfonate; and the amphoteric wetting dispersant may include, but is not limited to, a phosphate ester salt-type high-molecular polymer.

It should be noted that sodium carboxymethyl cellulose, which can be used as a thickener, also possesses a certain adhesiveness, and therefore, sodium carboxymethyl cellulose is also classified as the organic binder in the present application.

In some implementations, the organic component is a degradable organic component. For the definition of the degradable organic component, reference may also be made to the description in the context of the present application.

In the present application, unless otherwise specified, the "interface functional layer" is located between the solid electrolyte layer and at least one of the electrode layers on two sides of the solid electrolyte layer, that is, the interface functional layer is located in at least one of the following positions: (a position P1) between the solid electrolyte layer and the negative electrode layer; and (a position P2) between the solid electrolyte layer and the positive electrode layer. The interface functional layer between the positive electrode layer and the solid electrolyte layer is a "positive electrode interface functional layer", and the interface functional layer between the negative electrode layer and the solid electrolyte layer is a "negative electrode interface functional layer". Compared with the adjacent structural layers, the interface functional layer has a lower content of the organic component and, correspondingly, a higher content of the inorganic component. Based on this, the interface functional layer has a higher ion conduction and electron conduction and a higher comprehensive electrical conductivity than the adjacent structural layers.

The solid-state battery is provided with the interface functional layer between the solid electrolyte layer and at least one of the electrode layers, and the content of the organic component in the interface functional layer is lower than that in at least one of the solid electrolyte layer and the adjacent electrode active material layer. As a result, the interface functional layer has better charge transfer performance, better ion conduction and electron conduction, and high comprehensive conductivity. This can improve the interface compatibility between the electrode layer and the solid electrolyte layer and reduce interface impedance, thereby being beneficial for improving the electrochemical performance of the battery, including cycle performance. In addition, it is further beneficial for improving discharge capacity and rate performance.

In the present application, unless otherwise specified, one or more methods including but not limited to the following methods can be used to test and analyze the types and contents of the "organic components" in the "interface functional layer", the "positive electrode layer" and the "negative electrode layer": Fourier transform infrared (FT-IR) spectroscopy, ultraviolet spectroscopy, nuclear magnetic resonance hydrogen spectroscopy (¹H NMR), X-ray diffraction (XRD), gel permeation chromatography (GPC), high performance liquid chromatography (HPLC), mass spectrometry, and the like. These test methods have sample preparation methods and test methods which are known to a person skilled in the art, and test parameters can be appropriately adjusted according to the sample characteristics of a substance to be tested. The material of the corresponding structural layer may be extracted from an electrode sheet disassembled from a battery for testing, or the material of an electrode active material layer in an electrode sheet that has not been assembled into a battery may be tested. The battery to be tested may be a battery that has not been used after preparation, and may not be discharged or not be subjected to a charge-discharge cycle after being packaged. The battery to be tested may alternatively be a battery that has been discharged or subjected to a charge-discharge cycle after being prepared.

In some implementations, the solid-state battery includes a solid electrolyte layer and electrode layers which are located on two sides of the solid electrolyte layer, and an interface functional layer is provided between the solid electrolyte layer and the electrode layer on one of the two sides of the solid electrolyte layer.

In some implementations, the solid-state battery includes a positive electrode layer, a positive electrode interface functional layer, a solid electrolyte layer, and a negative electrode layer that are sequentially stacked.

In some implementations, the solid-state battery includes a positive electrode layer, a solid electrolyte layer, a negative electrode interface functional layer, and a negative electrode layer that are sequentially stacked.

In some implementations, the solid-state battery includes a positive electrode layer, a positive electrode interface functional layer, a solid electrolyte layer, a negative electrode interface functional layer, and a negative electrode layer that are sequentially stacked.

In some implementations, the organic component includes one or more of an organic binder and an organic dispersant. Without limitation, the organic binder may include, but is not limited to, one or more of polyvinylidene fluoride, styrene-butadiene rubber emulsion, carboxymethyl cellulose, sodium carboxymethyl cellulose, sodium alginate, polyvinyl alcohol, polymethylmethacrylate, hydrogenated nitrile rubber, polytetrafluoroethylene, and polyacrylic acid. Without limitation, the organic dispersant may include one or more of a cationic wetting dispersant, an anionic wetting dispersant, and an amphoteric wetting dispersant, where the cationic wetting dispersant may include, but is not limited to, one or more of an amine salt, a quaternary ammonium salt, and a pyridinium salt; the anionic wetting dispersant may include, but is not limited to, one or more of a fatty acid salt, a sulfate ester salt, and sulfonate; and the amphoteric wetting dispersant may include, but is not limited to, a phosphate ester salt-type high-molecular polymer. Unless otherwise specified, the cationic wetting dispersant such as the amine salt, the quaternary ammonium salts, and the pyridinium salt, and the anionic wetting dispersant such as the sulfate ester salt, and the sulfonate described herein refer to corresponding substances containing organic groups. A non-limiting example of the fatty acid salt is sodium oleate.

The organic components such as the organic binder and the organic dispersant may be provided in the electrode active material layer adjacent to the interface functional layer, and the content of these organic components in the interface functional layer is controlled to be lower, such that the interface functional layer has better ion conduction and electron conduction.

By setting the content difference between the foregoing organic components in the adjacent electrode layer and the interface functional layer, it is possible to achieve both good interface contact and structural stability in the electrode layer as well as high conductivity of the interface functional layer.

In some implementations, the thickness of any interface functional layer is less than or equal to 50 µm. Optionally, the thickness of any interface functional layer is 1 µm to 50 µm. Without limitation, the thickness of any interface functional layer may alternatively be any one of the following thicknesses or selected from an interval defined by any two of the following thicknesses: 1 µm, 2 µm, 3 µm, 4 µm, 5 µm, 6 µm, 8 µm, 10 µm, 12 µm, 14 µm, 15 µm, 16 µm, 18 µm, 20 µm, 24 µm, 25 µm, 26 µm, 28 µm, 30 µm, 32 µm, 34 µm, 35 µm, 36 µm, 38 µm, 40 µm, 45 µm, 50 µm, and the like.

Controlling the thickness of the interface functional layer within the foregoing range is beneficial for implementing better interface adhesion while improving interface compatibility and reducing interface impedance, and is beneficial for providing better structural stability for the solid-state battery.

In the present application, unless otherwise specified, the structure, internal interface and thickness of the "interface functional layer" may be tested and analyzed by the following method: a scanning electron microscope (SEM), a tomographic CT (Computed Tomography), and the like. A ray source used in tomographic CT may be an X-ray beam, a γ ray, an ultrasonic wave, or the like. A solid-state cell may be quenched in the thickness direction by liquid nitrogen, followed by microscopic morphology observation of a cross-section. Without limitation, the solid-state cell may alternatively be processed by an instrument including but not limited to a focused ion beam (FIB) microscope (non-limiting example: FEI Scios 2HiVac device), an ion cross-section polisher (non-limiting examples: IB-09010 CP argon ion cross-section polisher, IB-19500CP ion cross-section polisher, or the like of JEOL Corporation, Japan) or the like, to obtain the cross-section to be observed. The microscopic morphology observation method may use an instrument or device including but not limited to a scanning electron microscope (SEM) technology, and without limitation, may use a high-resolution field emission scanning electron microscope. Non-limiting examples of the SEM instrument include Sigma 300 scanning electron microscope from ZEISS, Apreo 2 SEM field emission scanning electron microscopes, or the like.

In some implementations, the positive electrode interface functional layer is present, and fₘ₁ < f_{mP}. In this case, σ₁ > σ_{P} may be implemented.

In some implementations, the positive electrode interface functional layer is present, and fₘ₁ < f_{mE}. In this case, σ₁ > σ_{E} may be implemented.

In some implementations, the positive electrode interface functional layer is present, fₘ₁ < f_{mP} and fₘ₁ < f_{mE}. In this case, σ₁ > σ_{P} and σ₁ > σ_{E} may be implemented.

When the content of the organic component in the positive electrode interface functional layer is lower than that in the positive electrode active material layer and lower than that in the solid electrolyte layer, the positive electrode interface functional layer can provide better ion conduction and electron conduction, which is more beneficial for reducing interface impedance.

In some implementations, the negative electrode interface functional layer is present, and fₘ₂ < f_{mN}. In this case, σ₂ > σ_{N} may be implemented.

In some implementations, the negative electrode interface functional layer is present, and fₘ₂ < f_{mE}. In this case, σ₂ > σ_{E} may be implemented.

In some implementations, the negative electrode interface functional layer is present, fₘ₂ < f_{mN} and fₘ₂ < f_{mE}. In this case, σ₂ > σ_{N}, and σ₂ > σ_{E} may be implemented.

In some implementations, the solid-state battery satisfies one or two of the following features:
the positive electrode interface functional layer is present, fₘ₁ < f_{mP} and fₘ₁ < f_{mE}; and
the negative electrode interface functional layer is present, fₘ₂ < f_{mN} and fₘ₂ < f_{mE}.

By controlling the content of the organic component in the positive electrode interface functional layer to be lower than that in the positive electrode active material layer and lower than that in the solid electrolyte layer, the positive electrode interface functional layer can provide better ion conduction and electron conduction, which is more beneficial for reducing interface impedance.

In the present application, unless otherwise specified, the conductivity of the positive electrode interface functional layer is denoted as σ₁, the conductivity of the negative electrode interface functional layer is denoted as σ₂; the conductivity of the positive electrode active material layer is denoted as σ_{P}; the conductivity of the negative electrode active material layer is denoted as σ_{N}; and the conductivity of the solid electrolyte layer is denoted as σ_{E}.

The conductivity of the material of the positive electrode interface functional layer is denoted as σ_{1'}; the conductivity of the material of the negative electrode interface functional layer is denoted as σ_{2'}; the conductivity of the material of the positive electrode active material layer is denoted as σ_{P}; the conductivity of the material of the negative electrode active material layer is denoted as σ_{N}; and the conductivity of the material of the solid electrolyte layer is denoted as σ_{E'}.

In the present application, the comparison results of the electrical conductivities of the structural layers may refer to the test results of the electrical conductivities of the material in the corresponding structural layers. Without limitation, the battery may be disassembled, a powder sample of a structural layer to be tested may be extracted, an ionic conductivity test may be performed, and test results of different structural layers may be compared. Reference can be made to the test analysis section of the following embodiments. When σ_{1'} > σ_{P'}, usually σ₁ > σ_{P}; when σ_{1'} > σ_{E'}, usually σ₁ > σ_{E}; when σ_{2'} > σ_{N'}, usually σ₂ > σ_{N}; and when σ₂ > σ_{E'}, generally σ₂ > σ_{E}.

Without limitation, the electrical conductivities of the interface functional layer, the positive electrode layer, the negative electrode layer, and the solid electrolyte layer may alternatively be tested and analyzed by electrochemical impedance spectroscopy (EIS). The corresponding structural layers may be disassembled from the battery, assembled into a symmetrical battery, and then tested and analyzed by EIS. The target structural layer may be disassembled by means of a focused ion beam (FIB) microscope (non-limiting example: FEI Scios 2HiVac device), an ion cross-section polisher (non-limiting examples: IB-09010 CP argon ion cross-section polisher, IB-19500CP ion cross-section polisher, or the like of JEOL Corporation, Japan) or the like., but is not limited to the foregoing obtaining manners. Without limitation, an electrochemical workstation may be used to perform EIS testing and analysis. EIS is a method that studies kinetics of electrode processes by applying a small amplitude sine wave potential (or current) as a perturbation signal to a system under test in a specific state and examining the relationship between a corresponding signal and the perturbation signal. Since a small-amplitude alternating signal substantially does not change the state of the system under test, this method can accurately study the relationship between the kinetic parameters of each electrode process and the state of the electrode. The EIS testing and analysis method is well known to a person skilled in the art.

For example, the conductivity of the solid electrolyte layer may be about 1 mS/cm to about 10 mS/cm.

In some implementations, the positive electrode interface functional layer is present, σ₁ is greater than at least one of σ_{P} and σ_{E}.

In some implementations, σ₁ > σ_{P}. Optionally, fₘ₁ < f_{mP}.

In some implementations, σ₁ > σ_{E}. Optionally, fₘ₁ < f_{mE}.

In some implementations, σ₁ > σ_{P} and σ₁ > σ_{E}. Optionally, fₘ₁ < f_{mP}, fₘ₁ < f_{mE}, σ₁ > σ_{P}, and σ₁ > σ_{E}.

In some implementations, the positive electrode interface functional layer is present, σ₁ > σ_{P} and fₘ₁ < f_{mP}, or, σ₁ > σ_{E} and fₘ₁ < f_{mE}.

In some implementations, the negative electrode interface functional layer is present, and σ₂ is greater than at least one of σ_{N} and σ_{E}.

In some implementations, σ₂ > σ_{N}. Optionally, fₘ₂ < f_{mN}.

In some implementations, σ₂ > σ_{E}. Optionally, fₘ₂ < f_{mE}.

In some implementations, σ₂ > σ_{N}, and σ₂ > σ_{E}. Optionally, fₘ₂ < f_{mN}, fₘ₂ < f_{mE}, σ₂ > σ_{N}, and σ₂ > σ_{E}.

In some implementations, the negative electrode interface functional layer is present, σ₂ > σ_{N} and fₘ₂ < f_{mN}, or σ₂ > σ_{E} and fₘ₂ < f_{mE}.

In some implementations, the solid-state battery satisfies one or more of the following features:

the positive electrode interface functional layer is present, and σ₁ is greater than at least one of σ_{P} and σ_{E}, optionally, when σ₁ > σfₘ₁ < f_{mP}, and when σ₁ > σ_{E}, fₘ₁ < f_{mE}; and
the negative electrode interface functional layer is present, and σ₂ is greater than at least one of σ_{N} and σ_{E}, optionally, when σ₂ > σ_{N}, fₘ₂ < f_{mN}, and when σ₂ > σ_{E}, fₘ₂ < f_{mE}.

In some implementations, the solid-state battery satisfies one or more of the following features:
the positive electrode interface functional layer is present, and σ₁ is greater than at least one of σ_{P} and σ_{E}, optionally, fₘ₁ < f_{mP}, fₘ₁ < f_{mE}, σ₁ > σ_{P}, and σ₁ > σ_{E}; and
the negative electrode interface functional layer is present, and σ₂ is greater than at least one of σ_{N} and σ_{E}, optionally, fₘ₂ < f_{mN}, fₘ₂ < f_{mE}, σ₂ > σ_{N}, and σ₂ > σ_{E}.

In some implementations, the solid-state battery satisfies one or more of the following features:
the positive electrode interface functional layer is present, σ₁ > σ_{P} and fₘ₁ < f_{mP}, or σ₁ > σ_{E} and fₘ₁ < f_{mE};
the negative electrode interface functional layer is present, σ₂ > σ_{N} and fₘ₂ < f_{mN}, or σ₂ > σ_{E} and fₘ₂ < f_{mE};
the positive electrode interface functional layer is present, fₘ₁ < f_{mP}, fₘ₁ < f_{mE}, σ₁ > σ_{P}, and σ₁ > σ_{E}; and
the negative electrode interface functional layer is present, fₘ₂ < f_{mN}, fₘ₂ < f_{mE}, σ₂ > σ_{N}, and σ₂ > σ_{E}.

When the positive electrode interface functional layer is present, the conductivity σ₁ of the positive electrode interface functional layer may be higher than the conductivity of at least one of the positive electrode active material layer and the solid electrolyte layer. Further, by regulating the content fₘ₁ of the organic component in the positive electrode interface functional layer to be lower than that in the positive electrode active material layer and lower than that in the solid electrolyte layer, the comprehensive conductivity of the positive electrode interface functional layer may be higher than that of the positive electrode layer and higher than that of the solid electrolyte layer.

When the conductivity σ₁ of the positive electrode interface functional layer is higher than the conductivity σ_{P} of the positive electrode active material layer, the mass percentage fₘ₁ of the organic component in the positive electrode interface functional layer may be set to be lower than the mass percentage f_{mP} of the organic component in the positive electrode active material layer.

When the conductivity σ₁ of the positive electrode interface functional layer is higher than the conductivity σ_{E} of the solid electrolyte layer, the mass percentage fₘ₁ of the organic component in the positive electrode interface functional layer may be set to be lower than the mass percentage f_{mE} of the organic component in the solid electrolyte layer.

When the negative electrode interface functional layer is present, the conductivity σ₂ of the negative electrode interface functional layer may be higher than the conductivity of at least one of the negative electrode active material layer and the solid electrolyte layer. Further, by regulating the content fₘ₂ of the organic component in the negative electrode interface functional layer to be lower than that in the negative electrode active material layer and lower than that in the solid electrolyte layer, the comprehensive conductivity of the negative electrode interface functional layer may be higher than that of the negative electrode layer and higher than that of the solid electrolyte layer.

When the conductivity σ₂ of the negative electrode interface functional layer is higher than the conductivity σ_{N} of the negative electrode active material layer, the mass percentage fₘ₂ of the organic component in the negative electrode interface functional layer may be set to be lower than the mass percentage f_{mN} of the organic component in the negative electrode active material layer.

When the conductivity σ₂ of the negative electrode interface functional layer is higher than the conductivity σ_{E} of the solid electrolyte layer, the mass percentage fₘ₂ of the organic component in the negative electrode interface functional layer may be set to be lower than the mass percentage f_{mE} of the organic component in the solid electrolyte layer.

In some implementations, the interface functional layer satisfies one or two of the following features:
at least a portion of the interface functional layer is an extension region of the adjacent electrode active material layer; and
at least a portion of the interface functional layer is an extension region of the solid electrolyte layer.

In the present application, unless otherwise specified, "at least a portion of the interface functional layer is an extension region of the adjacent electrode active material layer" means that the at least a portion of the interface functional layer transitions continuously with the adjacent electrode active material layer, and it can be considered that there is no identifiable interlayer interface between this portion of the interface functional layer and the adjacent electrode active material layer. For example, after etching treatment is performed on the initial electrode active layer of the electrode sheet, when the interface functional layer is formed by laminating the rough surface formed by the etching treatment with the solid electrolyte layer, the convex portions and an unetched portion in the rough surface originate from the same electrode substrate, and it may be considered that there is no identifiable interlayer interface between the two. In this case, the portion corresponding to the convex portions in the interface functional layer transitions continuously with the unetched portion (the unetched portion may correspond to the electrode active material layer of the corresponding electrode layer in the solid-state cell), such that the portion corresponding to the convex portions in the interface functional layer constitutes the extension region of the electrode active material layer.

In the present application, unless otherwise specified, "at least a portion of the interface functional layer is an extension region of the solid electrolyte layer" means that the at least a portion of the interface functional layer transitions continuously with the solid electrolyte layer, and it can be considered that there is no identifiable interlayer interface between this portion of the interface functional layer and the solid electrolyte layer. For example, after etching treatment is performed on the solid electrolyte film, the convex portions in the rough surface formed by the etching treatment and an unetched portion originate from the same solid electrolyte film substrate, it can be considered that there is no identifiable interlayer interface between the two. The portion corresponding to the convex portions in the interface functional layer transitions continuously with the unetched portion (the unetched portion may correspond to the corresponding solid electrolyte layer in the solid-state cell), such that the portion corresponding to the convex portion in the interface functional layer constitutes the extension region of the solid electrolyte layer.

When the at least a portion of the interface functional layer is the extension region of the adjacent electrode active material layer, the interface functional layer has better interface adhesion and lower interface impedance with the adjacent electrode layer under the conditions of providing better charge transfer, better ion conduction, and better electron conduction, which can significantly improve the cycle performance of the battery.

When the at least a portion of the interface functional layer is the extension region of the solid electrolyte layer, the interface functional layer has better interface adhesion and lower interface impedance with the solid electrolyte layer under the conditions of providing better charge transfer, better ion conduction, and better electron conduction, which can significantly improve the cycle performance of the battery.

When the at least a portion of the interface functional layer is the extension region of the adjacent electrode active material layer, and the at least a portion of the interface functional layer is the extension region of the solid electrolyte layer, better interface adhesion and lower interface impedance are achieved, the battery performance, at least including the cycle performance of the battery, can be significantly improved.

In some implementations, the interface functional layer includes an interface layer active substance of the same type as an electrode active substance in the adjacent electrode layer.

In some implementations, the interface functional layer includes an interface layer electrolyte material of the same type as a solid electrolyte material in the solid electrolyte layer.

In some implementations, the interface functional layer includes an interface layer active substance of the same type as an electrode active substance in the adjacent electrode layer, and further includes an interface layer electrolyte material of the same type as a solid electrolyte material in the solid electrolyte layer.

By providing, in interface functional layer, the same type of electrode active substance as that in the electrode active material layer and the same type of solid electrolyte material as that in the solid electrolyte layer, the compatibility of the interface functional layer with the electrode layer and the solid electrolytic layer can be better improved, and the interface impedance between the electrode layer and the solid electrolytic layer can be reduced.

The interface functional layer connecting the electrode layer and the solid electrolyte layer may be formed by the in-situ method described in the second aspect of the present application, but is not limited to these methods.

In some implementations, a staggered mating interface is provided in the interface functional layer.

As described above, the microscopic morphology of the cross-section can be observed using a scanning electron microscope (SEM), tomographic CT (computed tomography), or the like, to confirm whether there is a staggered mating interface in the interface functional layer, and further to analyze whether there are a first sublayer and a second sublayer described below. Further, the first sublayer and the second sublayer may be analyzed by combining an elemental analysis method. Without limitation, interface functions in the solid-state battery may be analyzed using focused electron beam (FIB) continuous slicing, cross-sectional SEM morphology observation, combined energy-dispersive spectroscopy (EDS) elemental spectroscopy, and three-dimensional reconstruction analysis software. For example, a three-dimensional structure of the sample may be reconstructed using the nano-space dynamic resolution of FIB-SEM and layer-by-layer cutting technology, and the distribution of each element may be obtained using EDS elemental spectroscopy.

The characteristic of the staggered mating interface provided in the interface functional layer can increase interface contact area, which is beneficial for improving interface connectivity and adhesion, and reducing interface impedance. This contributes to better layer-layer lamination between the electrode layer and the solid electrolyte layer, thereby further reducing the interface impedance between the electrode layer and the solid electrolyte layer.

In some implementations, any interface functional layer independently includes a first sublayer and a second sublayer, and the second sublayer is located between the first sublayer and the solid electrolyte layer;
the first sublayer and the adjacent electrode layer include the same type of electrode active substance; and
the second sublayer and the solid electrolyte layer include the same type of solid electrolyte material.

By providing, in interface functional layer, the first sublayer containing the same type of electrode active substance as that in the electrode active material layer and the second sublayer containing the same type of solid electrolyte material as that in the solid electrolyte layer, the compatibility of the interface functional layer with the electrode layer and the solid electrolytic layer can be better improved, and the interface impedance between the electrode layer and the solid electrolytic layer can be reduced, thereby better improving the foregoing electrochemical performance of the battery.

In some implementations, the positive electrode interface functional layer includes a first sublayer and a second sublayer.

In some implementations, the negative electrode interface functional layer includes a first sublayer and a second sublayer.

In some implementations, the mass proportion of the electrode active substance in the first sublayer is higher than the mass proportion of the electrode active substance in the second sublayer.

In some implementations, the mass proportion of the solid electrolyte material in the second sublayer is higher than the mass proportion of the solid electrolyte material in the first sublayer.

In some implementations, the mass proportion of the electrode active substance in the first sublayer is higher than the mass proportion of the electrode active substance in the second sublayer; and the mass proportion of the solid electrolyte material in the second sublayer is higher than the mass proportion of the solid electrolyte material in the first sublayer.

By using the characteristic that the content of the electrode active substance in the first sublayer is higher than that in the second sublayer, the mass proportion of the electrode active substance sequentially decreases from the corresponding electrode layer, through the interface functional layer, to the solid electrolyte layer. By using the characteristic that the content of the solid electrolyte material in the second sublayer is higher than that in the first sublayer, the mass proportion of the solid electrolyte material sequentially increases from the solid electrolyte layer, through the interface functional layer, to the corresponding electrode layer. These characteristics are more beneficial for reducing interface impedance.

In some implementations, a staggered mating interface is provided between the first sublayer and the second sublayer.

Allowing the first sublayer and the second sublayer to have a staggered mating contact interface can increase interface contact area, which is beneficial for improving interface connectivity and adhesion, and reducing interface impedance. This contributes to better layer-layer lamination between the electrode layer and the solid electrolyte layer, thereby further reducing the interface impedance between the electrode layer and the solid electrolyte layer. As a result, the foregoing electrochemical performance of the battery can be improved, including cycle performance, as well as discharge capacity and rate performance.

In some implementations, the first sublayer and the second sublayer are in staggered mating contact through an interface having a concave-convex shape.

In some implementations, the solid-state battery includes a positive electrode layer, a solid electrolyte layer, a negative electrode interface functional layer, and a negative electrode layer that are sequentially stacked. The negative electrode interface functional layer includes a first sublayer and a second sublayer, the first sublayer is in contact with the negative electrode layer, and the second sublayer is in contact with the solid electrolyte layer. In this case, the solid-state battery includes a positive electrode layer, a solid electrolyte layer, a second sublayer, a first sublayer, and a negative electrode layer that are sequentially stacked.

In some implementations, the solid-state battery includes a positive electrode layer, a positive electrode interface functional layer, a solid electrolyte layer, and a negative electrode layer that are sequentially stacked. The positive electrode interface functional layer includes a first sublayer and a second sublayer, the first sublayer is in contact with the positive electrode layer, and the second sublayer is in contact with the solid electrolyte layer. In this case, the solid-state battery includes a positive electrode layer, a first sublayer, a second sublayer, a solid electrolyte layer, and a negative electrode layer that are sequentially stacked.

In some implementations, the solid-state battery includes a positive electrode layer, a positive electrode interface functional layer, a solid electrolyte layer, a negative electrode interface functional layer, and a negative electrode layer that are sequentially stacked. The positive electrode interface functional layer and the interface functional layer each independently include a first sublayer and a second sublayer, and any one of the second sublayers is in contact with the solid electrolyte layer.

In some implementations, at least one of the positive electrode active material layer and the negative electrode active material layer includes an organic component; and
the density of the solid electrolyte layer is denoted as K_{E}, satisfying K_{E} ≥ 90%, optionally, K_{E} ≥ 97%. Without limitation, K_{E} may be any one of the following percentages or selected from an interval defined by any two of the following percentages: 90%, 91%, 92%, 93%, 94%, 95%, 96%, 97%, 98%, and the like.

In some implementations, at least one of the positive electrode active material layer and the negative electrode active material layer includes an organic component, and the organic component includes an organic binder.

In the present application, unless otherwise specified, the "density", also known as a packing ratio or a maximum space utilization rate, refers to a volume percentage occupied by atoms in a unit cell, namely the ratio of the volume of the atoms contained in the unit cell to the volume of the unit cell. The "density" may be used to characterize the degree of compactness of the atoms packing in the "structural layer". Unless otherwise specified, the density parameter K_{E} of the structural layer may be detected and analyzed by a true density tester (such as G-DenPyc 3900M).

When the solid electrolyte layer is prepared by using the positive electrode layer or the negative electrode layer as a substrate layer, by controlling the positive electrode active material layer or the negative electrode active material layer to contain the organic component, the organic binder can be removed by surface treatment to form exhaust microchannels, which is beneficial for improving the density during subsequent compressing (such as warm isostatic pressing treatment), thereby significantly improving the interface impedance in the solid electrolyte layer, and thereby being beneficial for improving the foregoing electrochemical performance of the battery.

In some implementations, the solid electrolyte layer includes an electrolyte organic component, and the solid-state battery satisfies at least one of the following features:
(b1) the density of the positive electrode layer is denoted as K_{P}, satisfying K_{P} ≥ 90%, optionally, K_{P} ≥ 97%;
(b2) the density of the negative electrode layer is denoted as K_{N}, satisfying K_{N} ≥ 90%, optionally, K_{N} ≥ 97%.

In some implementations, the solid electrolyte layer includes an electrolyte organic component, and the organic component may include one or more of an organic binder and an organic dispersant.

Without limitation, K_{P} may be any one of the following percentages or selected from an interval formed by any two of the following percentages: 90%, 91%, 92%, 93%, 94%, 95%, 96%, 97%, 98%, and the like.

Without limitation, K_{N} may be any one of the following percentages or selected from an interval defined by any two of the following percentages: 90%, 91%, 92%, 93%, 94%, 95%, 96%, 97%, 98%, and the like.

When the positive electrode layer or the negative electrode layer is prepared by using the solid electrolyte layer as a substrate layer, by controlling the solid electrolyte layer to contain the organic component, the organic binder can be removed by surface treatment to form exhaust microchannels, which is beneficial for improving the density during subsequent compressing (such as warm isostatic pressing treatment), thereby significantly improving the interface impedance in the positive electrode layer or the negative electrode layer, and thereby being beneficial for improving the foregoing electrochemical performance of the battery.

In some implementations, the solid-state battery is an all-solid-state battery.

In the present application, unless otherwise specified, the "all-solid-state battery" refers to a solid-state battery in which the electrolytes are all solid electrolytes. In this case, the positive electrode layer, the negative electrode layer, and the electrolyte are all made of solid materials, and no liquid electrolyte is provided in the battery, such that the battery may be referred to as the "all-solid-state battery".

The solid-state battery includes at least one solid-state battery cell. The solid-state battery may include one or more solid-state battery cells.

In the present application, unless otherwise specified, the "solid-state battery cell" refers to a basic unit capable of implementing mutual conversion between chemical energy and electrical energy, and components of the basic unit are all solid. In some implementations, the solid-state battery cell may be an all-solid-state battery cell.

In the present application, unless otherwise specified, the "all-solid-state battery cell" refers to a solid-state battery cell in which the electrolytes are all solid electrolytes. In this case, the positive electrode layer, the negative electrode layer, and the electrolyte are all made of solid materials, and no liquid electrolyte is provided in the battery cell, such that the battery cell may be referred to as the "all-solid-state battery cell".

Without limitation, the solid-state battery cell (the solid-state battery cell may be an all-solid-state battery cell) may include a positive electrode layer, a solid electrolyte layer, and a negative electrode layer, and the solid electrolyte layer is located between the positive electrode layer and the negative electrode layer. During charging and discharging of the battery, active ions are intercalated and deintercalated back and forth between the positive electrode layer and the negative electrode layer. The solid electrolyte layer serves to conduct ions between the positive electrode layer and the negative electrode layer, and can further serve to isolate the positive electrode layer from the negative electrode layer, thereby preventing a short circuit between positive and negative electrodes.

In some implementations, the solid-state battery cell 5 includes a solid-state cell 52.

In some implementations, the solid-state cell is an all-solid-state cell.

In some implementations, the solid-state cell 52 (the solid-state cell may be an all-solid-state cell) includes a positive electrode layer, a solid electrolyte layer, and a negative electrode layer that are sequentially stacked.

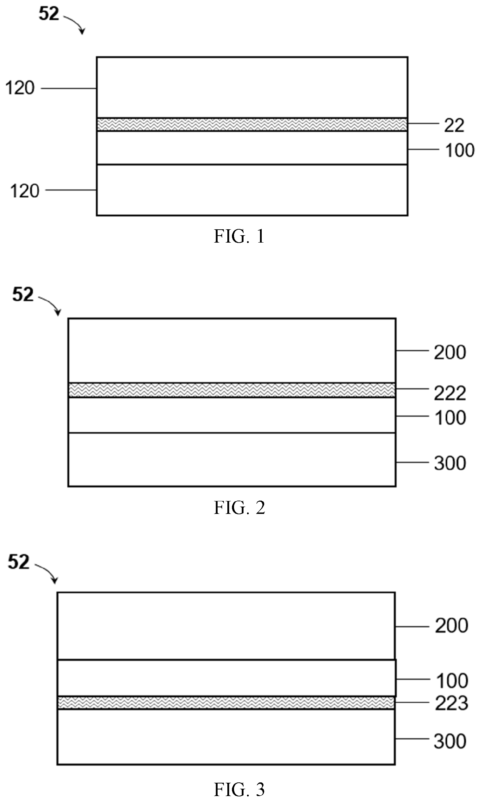

In some implementations, the solid-state cell 52 (the solid-state cell may be an all-solid-state cell) includes a solid electrolyte layer 100 and electrode layers 120 which are located on two sides of the solid electrolyte layer, and an interface functional layer 22 is provided between the solid electrolyte layer 100 and the electrode layer on one of the two sides of the solid electrolyte layer. Referring to FIG. 1, the interface functional layer 22 is provided between the solid electrolyte layer 100 and the electrode layer 120 on one of the two sides of the solid electrolyte layer.

In some implementations, the solid-state cell 52 (the solid-state cell may be an all-solid-state cell) includes a positive electrode layer 200, a positive electrode interface functional layer 222, a solid electrolyte layer 100, and a negative electrode layer 300 that are sequentially stacked. Referring to FIG. 2, the interface functional layer is provided between the solid electrolyte layer and the positive electrode layer.

In some implementations, the solid-state cell 52 (which may be an all-solid-state cell) includes a positive electrode layer 200, a solid electrolyte layer 100, a negative electrode interface functional layer 223, and a negative electrode layer 300 that are sequentially stacked. Referring to FIG. 3, the interface functional layer is provided between the solid electrolyte layer and the negative electrode layer.

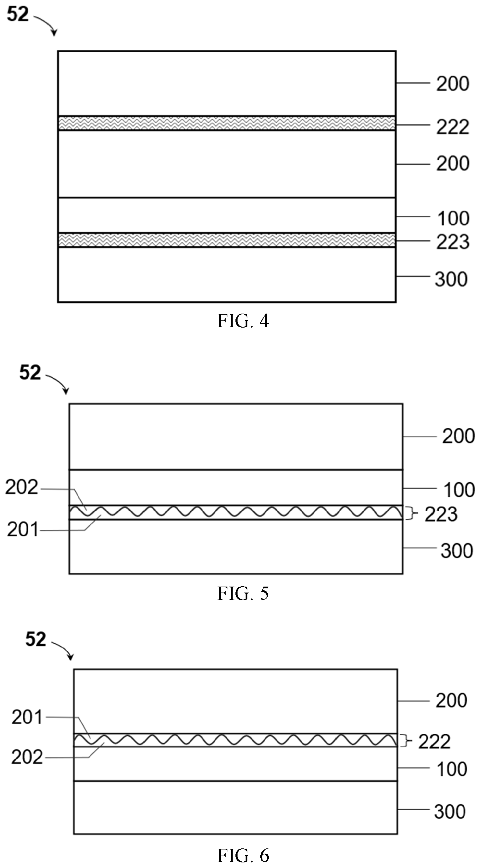

In some implementations, the solid-state cell 52 (the solid-state cell may be an all-solid-state cell) includes a positive electrode layer 200, a positive electrode interface functional layer 222, a solid electrolyte layer 100, a negative electrode interface functional layer 223, and a negative electrode layer 300 that are sequentially stacked. Referring to FIG. 4, the interface functional layers are respectively provided between the solid electrolyte layer and the positive electrode layer, and between the solid electrolyte layer and the negative electrode layer.

In some implementations, the solid-state cell 52 (the solid-state cell may be an all-solid-state cell) includes a positive electrode layer 200, a solid electrolyte layer 100, a negative electrode interface functional layer 223, and a negative electrode layer 300 that are sequentially stacked. The negative electrode interface functional layer 223 includes a first sublayer 201 and a second sublayer 202. The first sublayer 201 is in contact with the negative electrode layer 300, and the second sublayer 202 is in contact with the solid electrolyte layer 100. In this case, the solid-state cell 52 (which may be an all-solid-state cell) includes a positive electrode layer 200, a solid electrolyte layer 100, a second sublayer 202, a first sublayer 201, and a negative electrode layer 300 that are sequentially stacked. Reference can be made to FIG. 5.

In some implementations, the solid-state cell 52 (the solid-state cell may be an all-solid-state cell) includes a positive electrode layer 200, a positive electrode interface functional layer 222, a solid electrolyte layer 100, and a negative electrode layer 300 that are sequentially stacked. The positive electrode interface functional layer 222 includes a first sublayer 201 and a second sublayer 202. The first sublayer 201 is in contact with the positive electrode layer 200, and the second sublayer 202 is in contact with the solid electrolyte layer 100. In this case, the solid-state cell 52 (which may be an all-solid-state cell) includes a positive electrode layer 200, a first sublayer 201, a second sublayer 202, a solid electrolyte layer 100, and a negative electrode layer 300 that are sequentially stacked. Reference can be made to FIG. 6.

In the present disclosure, unless otherwise specified, "stacked" is used to describe the positional relationship of a plurality of layered structures, which means that the plurality of layered structures are stacked in the respective thickness direction thereof. The meaning of "stacked" may be understood by a person skilled in the art. For example, "including a structural layer A and a structural layer B stacked together" means that the stacking directions of the structural layer A and the structural layer B are along the respective layer thickness directions. That is, the thickness direction of the structural layer A is consistent or substantially consistent with the thickness direction of the structural layer B. It may be understood that other intermediate structural layers may be provided between the structural layer A and the structural layer B.

The following are some descriptions of the positive electrode layer.

The positive electrode layer may be formed based on a solid electrolyte film after etching treatment, or may be provided by a prefabricated positive electrode sheet, and the positive electrode sheet that can be used in the solid-state battery in the art may be used. Reference can be made to the second aspect of the present application.

The positive electrode sheet may be prepared by a dry method or a wet method. For example, the film may be formed by dry compressing. For another example, the film may be formed by wet coating and drying.

In some implementations, the positive electrode layer includes a positive electrode current collector and a positive electrode active material layer provided on at least one surface of the positive electrode current collector.

In the present application, unless otherwise specified, the positive electrode layer at least includes a positive electrode active material layer.

In the present application, unless otherwise specified, the positive electrode sheet at least includes a positive electrode active material layer. In some implementations, the positive electrode sheet includes an initial positive electrode active layer, and after etching treatment, a portion of the initial positive electrode active layer is involved in the formation of a positive electrode interface functional layer, and the remaining portion serves as a positive electrode active material layer.

In the present application, unless otherwise specified, the positive electrode active material layer at least includes positive electrode active particles, and usually further includes positive electrode electrolyte particles.

In the present application, unless otherwise specified, the "positive electrode active particle" refers to a particle containing a positive electrode active substance, and has the ability to reversibly deintercalate and intercalate active ions.

In the present application, unless otherwise specified, the "positive electrode electrolyte particles" and the "positive electrode solid electrolyte", have the same meaning and can be used interchangeably. They refer to a solid electrolyte that can be used in the positive electrode layer. The positive electrode electrolyte particles can serve to enhance the ion conduction of the positive electrode layer and reduce interface impedance, and can promote the charge transfer efficiency between the positive electrode active substance and the outside and sufficient release of the capacity of the positive electrode active substance.

In some implementations, the positive electrode active substance may be a positive electrode active substance for a battery known in the art. As a non-limiting example, the positive electrode active material may include one or more of the following materials: olivine-structured lithium-containing phosphate, lithium transition metal oxide, and their respective modified compounds. However, the present application is not limited to these materials, and another conventional material that can be used as a positive electrode active material of a battery may also be used. These positive electrode active materials may be used alone or in combination of two or more thereof. Examples of the lithium transition metal oxide may include, but is not limited to, one or more of lithium cobalt oxide, lithium nickel oxide, lithium manganese oxide, lithium nickel cobalt oxide, lithium manganese cobalt oxide, lithium nickel manganese oxide, lithium nickel cobalt manganese oxide, lithium nickel cobalt aluminum oxide, and modified compounds thereof. Non-limiting examples of the olivine-structured lithium-containing phosphate may include, but are not limited to, one or more of lithium iron phosphate, a lithium iron phosphate and carbon composite, lithium manganese phosphate, a lithium manganese phosphate and carbon composite, lithium iron manganese phosphate, and a lithium iron manganese phosphate and carbon composite. Non-limiting examples of the lithium cobalt oxide may include LiCoO₂. Non-limiting examples of the lithium nickel oxide may include LiNiO₂. Non-limiting examples of the lithium manganese oxide may include LiMnO₂ and LiMnO₂O₄. Non-limiting examples of the lithium nickel cobalt manganese oxide may include LiNi_{1/3}Co_{1/3}Mn_{1/3}O₂ (also abbreviated as NCM₃₃₃), LiNi_{0.5}Co_{0.2}Mn_{0.3}O₂ (also abbreviated as NCM₅₂₃), LiNi_{0.5}Co_{0.25}Mn_{0.25}O₂ (also abbreviated as NCM₂₁₁), LiNi_{0.6}Co_{0.2}Mn_{0.2}O₂ (also abbreviated as NCM₆₂₂), and LiNi_{0.8}Co_{0.1}Mn_{0.1}O₂ (also abbreviated as NCM₈₁₁). Non-limiting examples of the lithium nickel cobalt aluminum oxide may include LiNi_{0.80}Co_{0.15}Al_{0.05}O₂. An example of the lithium iron phosphate is, for example, LiFePO₄ (also abbreviated as LFP). An example of the lithium manganese phosphate is, for example, LiMnPO₄.

Without limitation, the weight proportion of the positive electrode active particles or the positive electrode active substance in the positive electrode active material layer may be ≥ 70 wt%, further may be ≥ 80 wt%, even further may be ≥ 90 wt%, and may alternatively be 70 wt% to 99 wt%, and optionally 80 wt% to 95 wt%.

Without limitation, the weight proportion of the positive electrode electrolyte particles in the positive electrode active material layer may be 0.1 wt% to 30 wt%, and optionally 5 wt% to 20 wt%.

In some implementations, the positive electrode active material layer includes positive electrode electrolyte particles. Without limitation, the weight proportion of the positive electrode electrolyte particles in the positive electrode active material layer may be 0.1 wt% to 30 wt%, and optionally 5 wt% to 20 wt%.

In some implementations, the positive electrode active material layer includes positive electrode active particles and positive electrode electrolyte particles.

In some implementations, the positive electrode active material layer includes a conductive agent (which may be denoted as a positive electrode conductive agent). As a non-limiting example, the positive electrode conductive agent may be a carbon conductive agent. Without limitation, the carbon conductive agent may include one or more of superconducting carbon, acetylene black, carbon black, Ketjen black, carbon dots, carbon nanotubes, graphene, and carbon nanofibers. In some embodiments, the positive electrode conductive agent may include, but is not limited to, one or more of SP, KS-6, acetylene black, Ketjen black ECP with a branched structure, SFG-6, vapor grown carbon fibers VGCF, carbon nanotubes (CNT), graphene, and the like. Without limitation, the weight percentage of the positive electrode conductive agent in the positive electrode active material layer may be 0 wt% to 10 wt%, further may be 0 wt% to 8 wt%, even further may be 0 wt% to 5 wt%, and still further may be 0.1 wt% to 3 wt%. When the positive electrode material is prepared into the positive electrode active material layer by the dry method, the positive electrode conductive agent may be provided in the positive electrode material, which may improve the electron conductivity of the positive electrode active material layer.

In some implementations, the positive electrode active material layer optionally includes a binder (which may be denoted as a positive electrode binder). As a non-limiting example, the positive electrode binder may include one or more of polyvinylidene fluoride (PVDF), polytetrafluoroethylene (PTFE), vinylidene fluoride-tetrafluoroethylene-propylene terpolymer, vinylidene fluoride-hexafluoropropylene-tetrafluoroethylene terpolymer, tetrafluoroethylene-hexafluoropropylene copolymer, and fluorine-containing acrylate resin. The foregoing positive electrode binders listed in a non-limiting manner are all organic binders, and belong to organic components. Generally, the weight percentage of the positive electrode binder in the positive electrode active material layer may be 0 wt% to 10 wt%, further may be 0 wt% to 8 wt%, even further may be 0.1 wt% to 5 wt%, and still further may be 1 wt% to 5 wt%. When the positive electrode material is prepared into a positive electrode slurry and then prepared into a positive electrode active material layer by the wet method, the positive electrode binder may be provided in the positive electrode slurry, which may assist in film formation and is further beneficial for promoting the formation of a good electrical contact network between the active particles of the positive electrode active material layer.

Without limitation, the positive electrode active material layer may include positive electrode active particles, positive electrode electrolyte particles, a positive electrode conductive agent, and a positive electrode binder. For the types and contents of the components, reference can be made to the context of the present application.

As a non-limiting example, the positive electrode current collector has two surfaces opposite to each other in its own thickness direction, and the positive electrode active material layer is arranged on either one or both of the two opposite surfaces of the positive electrode current collector.

In some embodiments, the positive electrode current collector may use a metal foil or a composite current collector. For example, an aluminum foil can be used as the metal foil. In the positive electrode current collector, the composite current collector may include a polymer material base layer and a metal layer formed on at least one surface of the polymer material base layer. In the positive electrode current collector, the composite current collector may be obtained by forming a metal material on the polymer material base layer. In the positive electrode current collector, a non-limiting example of the metal material may include at least one of aluminum, an aluminum alloy, nickel, a nickel alloy, titanium, a titanium alloy, silver, a silver alloy, and the like. In the positive electrode current collector, a non-limiting example of the polymer material base layer may include one or more of polypropylene (PP), polyethylene terephthalate (PET), polybutylene terephthalate (PBT), polystyrene (PS), polyethylene (PE), and the like.

In some embodiments, the electrode sheet may be prepared by the following method: The foregoing components for preparing the positive electrode sheet, such as the positive electrode active particles, the positive electrode electrolyte particles, the positive electrode conductive agent, the positive electrode binder, and any other components, are mixed in a dry state, and then the mixed materials are heated, pressurized, and kneaded into a doughy material. Hot rolling is performed on the doughy material to form a self-supporting positive electrode sheet, and the self-supporting positive electrode sheet is laminated with the positive electrode current collector by hot rolling. The self-supporting positive electrode sheet can be laminated on at least one side (one side or both sides) of the positive electrode current collector to obtain the positive electrode sheet. Without limitation, a dual planetary mixer may be used for dry mixing. Without limitation, the heating, pressurizing, and kneading may be performed using an internal mixer. Without limitation, the temperature for hot rolling may be 75°C to 85°C, further may be 78°C, 80°C, 82°C, or the like. The method for assembling a solid-state battery using a positive electrode sheet is suitable for industrial batch production.

In some embodiments, the electrode sheet may be prepared by the following method: The foregoing components for preparing the positive electrode sheet, such as the positive electrode active particles, the positive electrode electrolyte particles, the positive electrode conductive agent, the positive electrode binder, and any other components are dispersed in an organic solvent to form a positive electrode slurry. Further, the positive electrode slurry is coated on at least one side surface of the positive current collector, followed by processes such as drying and cold pressing, to obtain the positive electrode sheet. The cold pressing may be performed using a cold rolling mill. Without limitation, the organic solvent in the positive electrode slurry may include one or more of p-xylene, trimethylbenzene, butyl butyrate, heptane, and the like, and may further be p-xylene. The surface of the positive electrode current collector that is coated with the positive electrode slurry may be either a single surface or both surfaces of the positive electrode current collector. The solid content of the positive electrode slurry may be 40 wt% to 80 wt%. The viscosity of the positive electrode slurry at room temperature may be adjusted to 5000 mPa·s to 25000 mPa·s. During coating of the positive electrode slurry, based on a coating amount on the single side of the positive electrode current collector, the coating areal density based on a dry weight (excluding the solvent) may be 15 mg/cm² to 35 mg/cm², but is not limited thereto. The compaction density of the positive electrode sheet may be 3.0 g/cm³ to 3.6 g/cm³, and optionally 3.3 g/cm³ to 3.5 g/cm³.

As used herein, the "compaction density" has the meaning well-known in the art and is one reference index of the energy density of a material. In the present application, unless otherwise specified, the compaction density of the electrode layer refers to the ratio of the mass to the volume of the electrode active material layer. The compaction density of the positive electrode layer or the positive electrode sheet refers to the ratio of the mass to the volume of the positive electrode active material layer. The compaction density of the negative electrode layer or the negative electrode sheet refers to the ratio of the mass to the volume of the negative electrode active material layer.

The following are some descriptions of the negative electrode layer.

The negative electrode layer may be formed based on a solid electrolyte film after etching treatment, or may be provided by a prefabricated negative electrode sheet, and the negative electrode sheet that can be used in the solid-state battery in the art may be used. Reference can be made to the second aspect of the present application.

The negative electrode sheet may be prepared by a dry method or a wet method. For example, the film may be formed by dry compressing. For another example, the film may be formed by wet coating.

In the present application, unless otherwise specified, the negative electrode layer at least includes a negative electrode active material layer.

In the present application, unless otherwise specified, the negative electrode sheet at least includes a negative electrode active material layer. In some implementations, the negative electrode sheet includes an initial negative electrode active layer, and after etching treatment, a portion of the initial negative electrode active layer is involved in the formation of a negative electrode interface functional layer, and the remaining portion serves as a negative electrode active material layer.

In the present application, unless otherwise specified, the negative electrode active material layer at least includes negative electrode active particles.

Without limitation, the negative electrode active material layer may include a solid electrolyte. The solid electrolyte in the negative electrode active material layer may be referred to as "negative electrode electrolyte particles".

In the present application, unless otherwise specified, the "negative electrode electrolyte particles" refer to a solid electrolyte that can be used in the negative electrode layer. The negative electrode electrolyte particles can serve to enhance the ion conduction of the negative electrode layer and reduce interface impedance, and can promote the charge transfer efficiency between the negative electrode active substance and the outside and sufficient release of the capacity of the negative electrode active substance.

In the present application, unless otherwise specified, the "negative electrode active particle" refers to a particle containing a negative electrode active substance, and has the ability to reversibly deintercalate and intercalate active ions.

In some implementations, the negative electrode sheet includes a negative electrode active material layer, the negative electrode active material layer includes negative electrode active particles, and the negative electrode active particles contain a negative electrode active substance.

Without limitation, the weight percentage of the negative electrode active particles or the negative electrode active substance in the negative electrode active material layer may be ≥ 80 wt%, and further may be ≥ 90 wt%.

Without limitation, the weight proportion of the negative electrode electrolyte particles in the negative electrode active material layer may be 0 wt% to 30 wt%, optionally may be 0.1 wt% to 30 wt%, and further optionally may be 5 wt% to 20 wt%.

In some implementations, the negative electrode active particles or the negative electrode active substance is a lithium-indium alloy (InLi alloy).

In some implementations, the negative electrode layer or the negative electrode sheet is an InLi alloy film.

In some implementations, the negative electrode active substance may alternatively be a negative electrode active substance well-known in the art for solid-state batteries. As a non-limiting example, the negative electrode active material may include one or more of the following materials: one or more of elemental silicon, elemental tin, a silicon-carbon negative electrode, silicon monoxide, graphite, and metal lithium. However, the present application is not limited to these materials or substances, and another conventional material that can be used as a negative electrode active substance of a battery may also be used. These negative electrode active materials may be used alone or in combination of two or more thereof.

In some implementations, the negative electrode sheet includes a negative electrode current collector and a negative electrode active material layer provided on at least one surface of the negative electrode current collector, and the negative electrode active material layer includes a negative electrode active substance. As a non-limiting example, the negative electrode current collector has two surfaces opposite to each other in the thickness direction thereof, and the negative electrode active material layer is provided on either one or both of the two opposite surfaces of the negative electrode current collector. In some embodiments, the negative electrode current collector may employ a metal foil or composite current collector. For example, a copper foil may be used as the metal foil. In the negative electrode current collector, the composite current collector may include a polymer material base layer and a metal layer formed on at least one surface of the polymer material base layer. In the negative electrode current collector, the composite current collector may be formed by forming a metal material on the polymer material base layer. In the negative electrode current collector, a non-limiting example of the metal material may include one or more of copper, a copper alloy, nickel, a nickel alloy, titanium, a titanium alloy, silver, a silver alloy, and the like. In the negative electrode current collector, a non-limiting example of the polymer material base layer may include one or more of polypropylene (PP), polyethylene terephthalate (PET), polybutylene terephthalate (PBT), polystyrene (PS), polyethylene (PE), and the like.

In some implementations, the negative electrode active material layer optionally includes a conductive agent (which may be denoted as a negative electrode conductive agent). Without limitation, the negative electrode conductive agent may include one or more of superconducting carbon, acetylene black, carbon black, Ketjen black, carbon dots, carbon nanotubes, graphene, and carbon nanofibers. Without limitation, the weight percentage of the negative electrode conductive agent in the negative electrode active material layer may be 0 wt% to 15 wt%, further optionally may be 0 wt% to 10 wt%, and even further optionally may be 0 wt% to 5 wt%.

In some implementations, the negative electrode active material layer optionally includes a binder (which may be denoted as a negative electrode binder). As a non-limiting example, the negative electrode binder may include one or more of styrene-butadiene rubber (SBR), polyacrylic acid (PAA), sodium polyacrylate (PAAS), polyacrylamide (PAM), polyvinyl alcohol (PVA), sodium alginate (SA), polymethacrylic acid (PMAA), and carboxymethylchitosan (CMCS). Without limitation, the weight percentage of the negative electrode binder in the negative electrode active material layer may be 0 wt% to 10 wt%, further may be 0 wt% to 5 wt%, even further may be 1 wt% to 5 wt%, and still further may be 1 wt% to 3 wt%.

In some implementations, the negative electrode active material layer optionally includes other auxiliary agents, for example, a thickening agent (such as sodium carboxymethyl cellulose (CMC-Na)). The weight percentage of other auxiliary agents in the negative electrode active material layer may be 0 wt% to 15 wt%, further optionally 0 wt% to 10 wt%, still further optionally 0 wt% to 5 wt%, still further optionally 0 wt% to 3 wt%, and still further optionally 0 wt% to 2 wt%.

In some embodiments, the negative electrode sheet may be prepared by the following method: The foregoing components for preparing the negative electrode sheet, such as the negative electrode active particles, the negative electrode conductive agent, the negative electrode binder, and any other components are dispersed in a solvent (a non-limiting example of the solvent is, for example, p-xylene) to form a negative electrode slurry Further, the negative electrode slurry is coated on at least one side surface of the negative current collector, followed by processes such as drying and cold pressing, to obtain the negative electrode sheet. The cold pressing may be performed using a cold rolling mill. The surface of the negative electrode current collector that is coated with the negative electrode slurry may be either a single surface or both surfaces of the negative electrode current collector. The solid content of the negative electrode slurry may be 30 wt% to 70 wt%, and optionally may be 40 wt% to 60 wt%. The viscosity of the negative electrode slurry at room temperature may be adjusted to 2,000 mPa·s to 10,000 mPa·s, and optionally 3,000 mPa·s to 10,000 mPa·s. During coating of the negative electrode slurry, based on a coating amount on the single side of the negative electrode current collector, the coating areal density based on a dry weight (excluding the solvent) may be 1.5 mg/cm² to 22 mg/cm², but is not limited thereto. The compaction density of the negative electrode sheet may be 1.0 g/cm³ to 2.0 g/cm³, and optionally may be 1.0 g/cm³ to 1.8 g/cm³.

The following are some descriptions of the solid electrolyte layer.

The solid electrolyte layer may be introduced by forming electrode layers on two sides of the solid electrolyte film, or may be provided on the electrode layers.

The solid electrolyte layer serves to conduct ions between the positive electrode layer and the negative electrode layer, and can further serve to isolate the positive electrode layer from the negative electrode layer, thereby preventing a short circuit between positive and negative electrodes.

It may be understood that the solid electrolyte layer includes a solid electrolyte. The solid electrolyte in the solid electrolyte layer may be a solid electrolyte that is known in the art and can be used in solid-state batteries.

The types of the solid electrolytes present in different film layers of the solid-state battery may be the same or different. For example, the positive electrode electrolyte particles and the solid electrolyte in the solid electrolyte layer may be the same or different.

As a non-limiting example, the solid electrolytes may each independently include one or more of the following materials: one or more of a sulfide-based solid electrolyte, a halide-based solid electrolyte, an oxide-based solid electrolyte, a polymer-based solid electrolyte, and the like.

As another non-limiting example, the solid electrolytes may each independently include, but are not limited to, one or more of an oxide-based solid electrolyte, a sulfide-based solid electrolyte, and a halide-based solid electrolyte. In some embodiments, the solid electrolytes may each independently include, but are not limited to, one or more of an Argyrodite-type sulfide electrolyte and a halide electrolyte. Non-limiting examples of the oxide-based solid electrolyte may include one or more of an LISICON-type oxide electrolyte (such as γ-Li₃PO₄), an NASICON-type oxide electrolyte (such as Li₁₊ₓAlₓGe₂₋ₓ(PO₄)₃, Li₁₊ₓAlₓTi₂₋ₓ(PO₄)₃, 0 ≦ x ≦ 1), a Garnet-type (such as Li₇La₃Zr₂O₁₂), a perovskite type oxide electrolyte (such as Li₃ₓLa_{2/3-x}TiO₃, 0 ≤ x ≤ 0.5). Non-limiting examples of the sulfide-based solid electrolyte may include one or more of Li₁₀GeP₂S₁₂, Li₂S-P₂S₅, Argyrodite-type (such as Li₆PS₅Cl, Li_{5.5}PS_{5.5}Cl_{1.5}), and the like. Non-limiting examples of the halide-based solid electrolyte may include one or more of Li₃InClₑ, Li₃YClₑ, Li₃ScCl₆, Li₃ErClₑ, Li₂ZrCl₆, and the like.

The solid electrolyte film or the solid electrolyte layer may be prepared by the dry method. In some implementations, the solid electrolyte layer may be a solid electrolyte film compressed from a solid electrolyte material. In some other implementations, the solid electrolyte layer is formed by compressing the raw material compositions of the solid electrolyte layer on the electrode layer. In some other implementations, the solid electrolyte film may alternatively be prepared by a fiberization combined with calender film-forming method, a melt extrusion method, a spraying method, or the like.

The solid electrolyte layer may alternatively be prepared by the wet method, and the electrolyte slurry used at least includes a solid electrolyte and an organic solvent, and usually further includes one or more of a binder and a dispersant.

In some implementations, the solid electrolyte layer may be formed based on a positive electrode sheet after etching treatment. Reference can be made to the second aspect of the present application.

In some implementations, the solid electrolyte layer may be formed based on a negative electrode sheet after etching treatment. Reference can be made to the second aspect of the present application.

In some implementations, the thickness of the solid electrolyte layer may be 0.1 µm to 1000 µm, and optionally may be 10 µm to 100 µm, 100 µm to 800 µm, 500 µm to 800 µm, or the like.

In some implementations, the solid-state battery may include an outer package. The outer package may be used to package the foregoing solid-state cell.

In some implementations, the outer package of the solid-state battery may be a hard casing, such as a hard plastic casing, an aluminum casing, or a steel casing. The outer package of the solid-state battery may alternatively be a pouch, such as a bag-type pouch. A material of the pouch may be plastic, and further, non-limiting examples of the plastic may include one or more of polypropylene, polybutylene terephthalate, and polybutylene succinate.

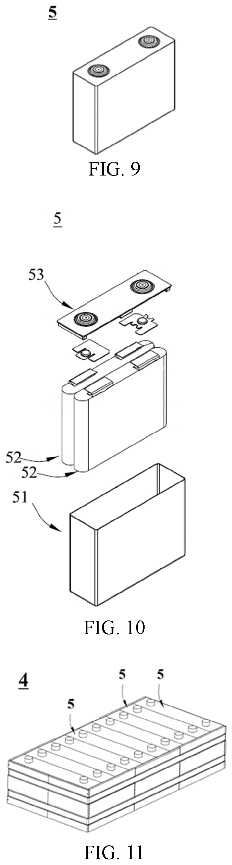

The shape of the solid-state battery cell is not particularly limited in the present application, and may be a cylindrical shape, a square shape, or any other shape. For example, FIG. 9 shows a solid-state battery cell 5 with a square structure as an example.

In some implementations, referring to FIG. 10, the outer package may include a housing 51 and a cover plate 53. The housing 51 may include a bottom plate and side plates connected to the bottom plate, and the bottom plate and the side plates define an accommodating chamber. The housing 51 is provided with an opening communicating with the accommodating chamber, and the cover plate 53 can cover the opening to close the accommodating chamber. The solid-state cell 52 is packaged in the accommodating chamber. There may be one or more solid-state cells 52 included in the solid-state battery cell 5, and a person skilled in the art may perform selection based on actual requirements.

The solid-state battery may be a battery module 4 or a battery pack 1.

The battery module includes at least one solid-state battery cell. There may be one or more solid-state battery cells included in the battery module, and a person skilled in the art may select a proper quantity based on an application and the capacity of the battery module.

FIG. 11 shows a battery module 4 as an example. Referring to FIG. 11, in the battery module 4, a plurality of solid-state battery cells 5 may be sequentially arranged in the length direction of the battery module 4. Certainly, the battery cells may alternatively be arranged in any other manner. Further, the plurality of solid-state battery cells 5 may be fastened using fasteners.

Optionally, the battery module 4 may further include a casing having an accommodating space in which the plurality of solid-state battery cells 5 are accommodated.

In some embodiments, the above battery modules may also be assembled into a battery pack, and there may be one or more battery modules included in the battery pack, and those skilled in the art may select a proper quantity according to the application and capacity of the battery pack.

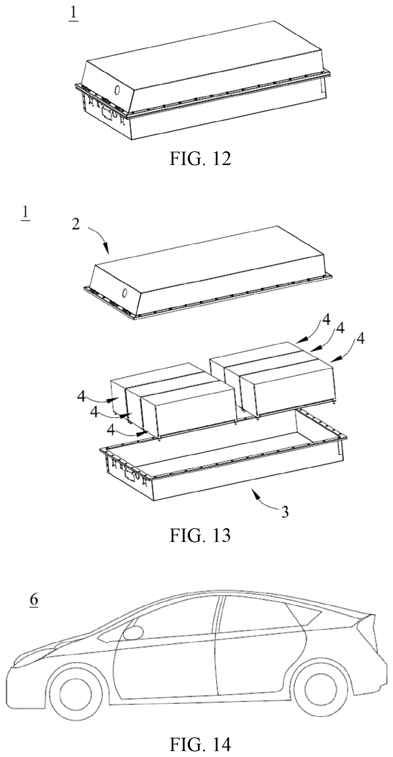

FIG. 12 and FIG. 13 show a battery pack 1 as an example. Referring to FIG. 12 and FIG. 13, a battery case and a plurality of battery modules 4 arranged in the battery case may be included in the battery pack 1. The battery case includes an upper case 2 and a lower case 3, the upper case 2 being capable of covering the lower case 3 and forming a closed space for accommodating the battery modules 4. The plurality of battery modules 4 may be arranged in any manner in the battery case.

According to a second aspect of the present applications, some preparation methods for a solid-state battery are provided.

These methods are methods for forming interface functional layers in situ, and adjacent structural layers are introduced based on a surface after etching treatment, such that there may be no identifiable interlayer interface between at least a portion of the interface functional layer and the adjacent structural layer, but there is a continuous interlayer transition, and better interface adhesion is achieved between the structural layers on two sides of the interface functional layer, and lower interface impedance is achieved. This can improve the battery performance, such as cycle performance, but is not limited to improving cycle performance. For example, this is further beneficial for improving discharge capacity and rate performance. Depending on the position of the interface functional layer, there may be no identifiable interlayer interface between at least a partial region of the interface functional layer and the adjacent structural layer. There may alternatively be no identifiable interlayer interface between at least a partial region of the interface functional layer and the solid electrolyte layer. Both the foregoing situations are allowed.

Compared with an ex-situ method in which an intermediate functional layer with components identical or similar to those of an interface functional layer is introduced between the electrode layer and the solid electrolyte layer by wet coating, the in-situ method according to the second aspect of the present application is beneficial for implementing better interface adhesion, lower interface impedance, and better structural stability, is further beneficial for implementing significantly better battery performance, including significantly better battery cycle performance, and can further implement significantly better discharge capacity and rate performance. A non-limiting example of the ex-situ method is as follows. The components of the intermediate functional layer that are the same as or similar to those of the interface functional layer are dispersed in an organic solvent to form an intermediate functional layer slurry. The intermediate functional layer slurry is coated on an unetched surface and dried. Corresponding structural layer films are introduced by a dry method or a wet method, and cold pressing is performed to form the intermediate functional layer and adjacent structural layers.

By using the method for forming an interface functional layer in situ, the interface functional layer can satisfy one or two of the following features:
at least a portion of the interface functional layer is an extension region of the adjacent electrode active material layer (in this case, there is no identifiable interlayer interface between this portion of the interface functional layer and the adjacent electrode active material layer); and
at least a portion of the interface functional layer is an extension region of the solid electrolyte layer (in this case, there is no identifiable interlayer interface between this portion of the interface functional layer and the solid electrolyte layer).

For the definitions of the "at least a portion of the interface functional layer is an extension region of the adjacent electrode active material layer" and the "at least a portion of the interface functional layer is an extension region of the solid electrolyte layer", reference can be made to the foregoing.

When the at least a portion of the interface functional layer is the extension region of the adjacent electrode active material layer, the interface functional layer has better interface adhesion and lower interface impedance with the adjacent electrode layer under the conditions of providing better charge transfer, better ion conduction, and better electron conduction, which can significantly improve the cycle performance of the battery.

When the at least a portion of the interface functional layer is the extension region of the solid electrolyte layer, the interface functional layer has better interface adhesion and lower interface impedance with the solid electrolyte layer under the conditions of providing better charge transfer, better ion conduction, and better electron conduction, which can significantly improve the cycle performance of the battery.

When the at least a portion of the interface functional layer is the extension region of the adjacent electrode active material layer, and the at least a portion of the interface functional layer is the extension region of the solid electrolyte layer, better interface adhesion and lower interface impedance are achieved, the battery performance, at least including the cycle performance of the battery, can be significantly improved.

In some implementations, a preparation method for a solid-state battery is provided, including the steps as follows.

S10: Perform etching treatment on an initial electrode active layer located on at least one side surface of an electrode sheet to form a rough surface having electrode concave portions, the electrode sheet after the etching treatment including electrode convex portions corresponding to the electrode concave portions. The initial electrode active layer includes a degradable organic component. After the etching treatment, the content of the degradable organic component in the electrode convex portion decreases.

S20: Provide an electrolyte pre-coating layer on the rough surface having the electrode concave portions, and compress the electrolyte pre-coating layer, thereby allowing the electrode convex portions and the portions of the electrolyte pre-coating layer filled in the corresponding electrode concave portions to jointly form an interface functional layer, allowing the remaining portion of the electrolyte pre-coating layer to form a solid electrolyte layer, and allowing the remaining portion of the initial electrode active layer to form an electrode active material layer.

S30: Form an electrode layer on one side surface that is of the solid electrolyte layer and that is away from the interface functional layer.

It may be understood that one of the electrode sheet in step S10 and the electrode layer in step S30 corresponds to a positive electrode, and the other corresponds to a negative electrode.

In step S10, after the etching treatment, the remaining portion of the initial electrode active layer, excluding the portions forming the electrode convex portions, is an electrode active material layer. In other words, the electrode active material layer corresponds to the unetched portion of the electrode active initial layer. When the electrode sheet is a negative electrode sheet, the initial electrode active layer is an initial negative electrode active layer, and the electrode active material layer serves as a negative electrode active material layer. When the electrode sheet is a positive electrode sheet, the initial electrode active layer is an initial positive electrode active layer, and the electrode active material layer is a positive electrode active material layer.

In step S10, the "rough surface having electrode concave portions" formed in the electrode sheet may alternatively be denoted as an "electrode rough surface". It may be understood that the electrode rough surface formed based on the negative electrode sheet may alternatively be denoted as a negative electrode rough surface, and the electrode rough surface formed based on the positive electrode sheet may alternatively be denoted as a positive electrode rough surface.

In step S10, after the etching treatment, the content of the degradable organic component in the electrode convex portion decreases, and the content of the degradable organic component in the electrode active material layer remains unchanged, such that the content of the organic component in the formed interface functional layer is lower than the content of the organic component in the electrode active material layer.

In the present application, unless otherwise specified, in step S20, the "remaining portion of the electrolyte pre-coating layer" refers to the portion of the electrolyte pre-coating layer that is not filled in the electrode concave portions, and unless otherwise specified, it may be understood as the portion that is not in contact with the electrode rough surface (the "rough surface having the electrode concave portions" formed in the electrode sheet) in the thickness direction of the electrolyte pre-coating layer.

By etching the surface of the electrode sheet, the degradable organic component is partially or completely removed such that the content of the organic component decreases. On the one hand, the content of the inorganic component in the etched region on the surface of the electrode can increase with the reduction of the content of the organic component, thereby improving the conductivity of the surface of the electrode, reducing interface impedance, and improving the electrochemical performance of the battery, including cycle performance and the like. In addition, it is further beneficial for improving discharge capacity and rate performance. On the other hand, the rough surface having electrode concave portions can be formed on the surface of the electrode. When the solid electrolyte layer is further prepared, microchannels capable of exhausting gas can be formed between the formed solid electrolyte layer and the rough surface, and during subsequent compressing (such as warm isostatic pressing treatment), these microchannels can be used to exhaust gas, thereby improving the degree of compaction of the solid electrolyte layer and improving the density of the formed solid electrolyte layer. In addition, the rough surface can further increase contact area with the solid electrolyte layer, which is further beneficial for reducing interface impedance, thereby improving battery performance, at least including the cycle performance of the battery.

In some implementations, the electrode sheet includes a current collector and an initial electrode active layer located on at least one side of the current collector.

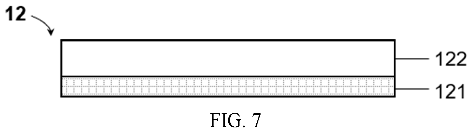

In some implementations, the electrode sheet 12 includes a current collector 121 and an initial electrode active layer 122 located on at least one side surface of the current collector 121. The initial electrode active layer may be located on one side or both sides of the current collector. FIG. 7 provides a non-limiting example of an electrode sheet. The electrode sheet 12 includes a current collector 121 and an initial electrode active layer 122 located on one side surface of the current collector 121.

In the present application, unless otherwise specified, the "degradable organic component" refers to an organic component that can be selectively degraded and removed by a surface treatment technology available in the field of solid-state batteries, such as an organic component that can be degraded and removed by etching treatment. Non-limiting examples of etching technology include one or more of plasma treatment and laser treatment.

In the present application, unless otherwise specified, the following method may be used to determine whether "a substance or some substances belong to the degradable organic component". Substances that satisfy the result of any of the following tests may be classified as the degradable organic component:
Test method I: Substances that can degrade upon plasma treatment in the presence of oxygen, with an etching power that is at least one power ranging from 3 kW to 10 kW. The plasma treatment may at least include oxygen plasma treatment, and reference can be made to an oxygen plasma treatment condition described below.
Test method II: Substances that can degrade upon laser treatment with a wavelength of 0.75 µm to 14 µm (such as 3 µm to 5 µm), with an etching power that is at least one power ranging from 5 kW to 20 kW. Reference can be also made to a laser treatment condition described below.

A method for identifying whether a substance has been degraded is readily available to a person skilled in the art. For example, whether degradation occurs can be judged according to the change of a molecular weight. If the molecular weight decreases, it may be considered that degradation occurs. For another example, whether degradation occurs may be determined according to the structural changes of the components and the changes of the substance types before and after the test treatment. Generally, when a degradation reactions occur, new substances with smaller molecular weight are generated due to chemical bond breakage. Test analysis may be performed using one or more methods including, but not limited to, the following methods: Fourier transform infrared (FT-IR) spectroscopy, ultraviolet spectroscopy, nuclear magnetic resonance hydrogen spectroscopy (¹H NMR), X-ray diffraction (XRD), gel permeation chromatography (GPC), high performance liquid chromatography (HPLC), mass spectrometry, and the like. These test methods have sample preparation methods and test methods which are known to a person skilled in the art, and test parameters can be appropriately adjusted according to the sample characteristics of a substance to be tested.

In the present application, unless otherwise specified, the following substances are classified as the "degradable organic component": an organic binder, an organic dispersant, and the like. Non-limiting examples of the organic binder includes one or more of polyvinylidene fluoride, styrene-butadiene rubber emulsion, carboxymethyl cellulose, sodium carboxymethyl cellulose, sodium alginate, polyvinyl alcohol, polymethylmethacrylate, hydrogenated nitrile rubber, polytetrafluoroethylene, polyacrylic acid, and the like. Non-limiting examples of the organic dispersant may include one or more of a cationic wetting dispersant, an anionic wetting dispersant, and an amphoteric wetting dispersant, where the cationic wetting dispersant may include, but is not limited to, one or more of an amine salt, a quaternary ammonium salt, and a pyridinium salt; the anionic wetting dispersant may include, but is not limited to, one or more of a fatty acid salt, a sulfate ester salt, and sulfonate; and the amphoteric wetting dispersant may include, but is not limited to, a phosphate ester salt-type high-molecular polymer. A non-limiting example of the fatty acid salt is sodium oleate. The following substances are confirmed to be degradable using the test method I and the test method II: dodecylfatty amine, cetylpyridinium chloride, sodium oleate, sodium dodecyl sulfate, sodium hexadecylsulfonate, polyethylene glycol monooleate phosphate, or the like.

In the present application, unless otherwise specified, one or more methods including but not limited to the following methods can be used to test and analyze the types and contents of the "degradable organic components" in the "interface functional layer", the "positive electrode layer" and the "negative electrode layer": Fourier transform infrared (FT-IR) spectroscopy, ultraviolet spectroscopy, nuclear magnetic resonance hydrogen spectroscopy (¹H NMR), X-ray diffraction (XRD), gel permeation chromatography (GPC), high performance liquid chromatography (HPLC), mass spectrometry, and the like. The material of the corresponding structural layer may be extracted from an electrode sheet disassembled from a battery for testing, or the material of an electrode active material layer in an electrode sheet that has not been assembled into a battery may be tested. The battery to be tested may be a battery that has not been used after preparation, and may not be discharged or not be subjected to a charge-discharge cycle. The battery to be tested may alternatively be a battery that has been discharged or subjected to a charge-discharge cycle after being prepared.

In some implementations, a preparation method for a solid-state battery is provided, including the steps as follows.

S310: Perform etching treatment on an initial negative electrode active layer located on at least one side surface of a negative electrode sheet to form a negative electrode rough surface having negative electrode concave portions, the negative electrode sheet after the etching treatment including negative electrode convex portions corresponding to the negative electrode concave portions. The initial negative electrode active layer includes a degradable organic component. After the etching treatment, the content of the degradable organic component in the negative electrode convex portion decreases.

S320: Provide an electrolyte pre-coating layer on the negative electrode rough surface, and compress the electrolyte pre-coating layer, thereby allowing the negative electrode convex portions and the portions of the electrolyte pre-coating layer filled in the corresponding negative electrode concave portions to jointly form a negative electrode interface functional layer, and allowing the remaining portion of the electrolyte pre-coating layer to form a solid electrolyte layer.

S330: Form a positive electrode layer on one side surface that is of the solid electrolyte layer and that is away from the negative electrode interface functional layer.

After the etching treatment in step S310, the unetched portion of the negative electrode sheet can form a negative electrode layer in the prepared solid-state battery.

In step S310, the remaining portion of the initial negative electrode active layer, excluding the portions forming the negative electrode convex portions, serves as a negative electrode active material layer, corresponding to the unetched portion of the initial negative electrode active layer.

In step S320, the "remaining portion of the electrolyte pre-coating layer" has the same meaning as that in the foregoing step S20.

In some implementations, the negative electrode sheet includes a negative electrode current collector and an initial negative electrode active layer located on at least one side of the negative electrode current collector.

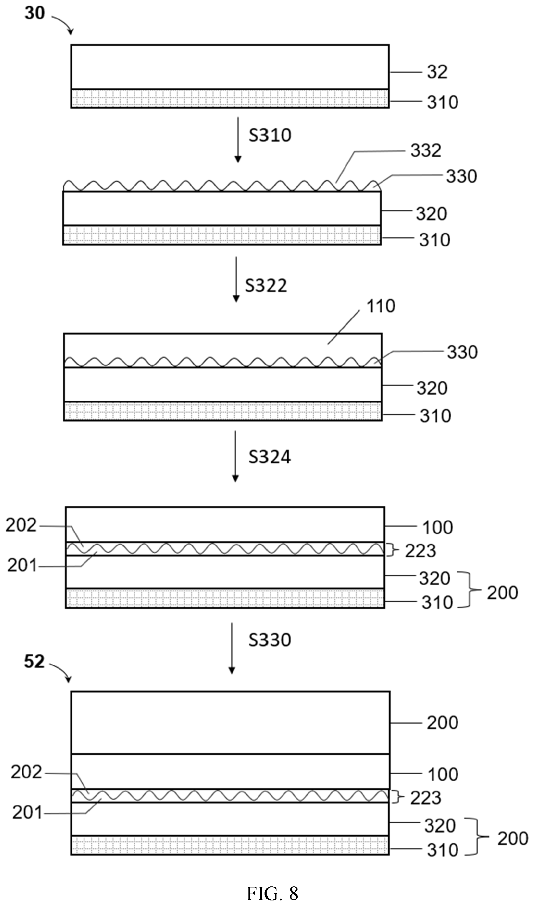

In some implementations, the negative electrode sheet 30 includes a negative electrode current collector 310 and an initial negative electrode active layer 32 located on at least one side surface of the negative electrode current collector 310. The initial negative electrode active layer 32 may be located on one side or both sides of the current collector 310. In a preparation method for a solid-state battery illustrated in FIG. 8, the negative electrode sheet 30 used includes a negative electrode current collector 310 and an initial negative electrode active layer 32 located on one side surface of the negative electrode current collector 310. In some implementations, in the prepared solid-state battery 52, the negative electrode current collector 310 and the negative electrode active material layer 320 jointly constitute the negative electrode layer 300.

The solid electrolyte layer and the positive electrode layer may be sequentially prepared on the negative electrode sheet with the initial negative electrode active layer containing the degradable organic component, and the degradable organic component is partially or completely removed by performing the etching treatment on the initial negative electrode active layer located on the surface of the negative electrode sheet, such that the content of the organic component decreases. On the one hand, the content of an inorganic component in an etched region on the surface of the negative electrode may increase with the decrease of the content of the organic component, thereby improving the conductivity of the surface of the negative electrode, reducing interface impedance, and improving the electrochemical performance of the battery, including cycle performance and the like. In addition, it is further beneficial for improving discharge capacity and rate performance. On the other hand, the negative electrode rough surface having the negative electrode concave portions can be formed on the surface of a negative electrode. When the solid electrolyte layer is further prepared, microchannels capable be exhausting gas can be formed between the formed solid electrolyte layer and the negative electrode rough surface, and during subsequent compressing (such as warm isostatic pressing treatment), these microchannels can be used to exhaust gas, thereby improving the degree of compaction of the solid electrolyte layer and improving the density of the formed solid electrolyte layer. In addition, the negative electrode rough surface can further increase contact area with the solid electrolyte layer, which is further beneficial for reducing interface impedance, thereby improving the battery performance, at least including the cycle performance of the battery.

Reference may be made to the flowchart of the preparation method for a solid-state battery shown in FIG. 8. The preparation method includes the steps as follows.

S310: Provide a negative electrode sheet 30, the negative electrode sheet 30 including a negative electrode current collector 310 and an initial negative electrode active layer 32 located on one side surface of the negative electrode current collector 310; and
perform etching treatment on the initial negative electrode active layer 32 to form a negative electrode rough surface having negative electrode concave portions 332, the negative electrode sheet after the etching treatment including negative electrode convex portions 330 corresponding to the negative electrode concave portions 332 and a negative electrode active material layer 320 that is not subjected to etching treatment. The initial negative electrode active layer 32 includes a degradable organic component. After the etching treatment, the content of the degradable organic component in the negative electrode convex portion 330 decreases.

S322: Provide an electrolyte pre-coating layer 110 on the negative electrode rough surface.

S324: Compress the electrolyte pre-coating layer 110, thereby allowing the negative electrode convex portions 330 and the portions of the electrolyte pre-coating layer filled in the corresponding negative electrode concave portions 332 to jointly form a negative electrode interface functional layer 223, and allowing the remaining portion of the electrolyte pre-coating layer to form a solid electrolyte layer 100. In this process, the negative electrode convex portions 330 form a first sublayer 201, and the portions of the electrolyte pre-coating layer at the negative electrode concave portions 332 form a second sublayer 202. The negative electrode interface functional layer 223 includes the first sublayer 201 and the second sublayer 202.

S330: Form a positive electrode layer 200 on one side surface that is of the solid electrolyte layer 100 and that is away from the negative electrode interface functional layer 223.

In some implementations, when the solid electrolyte layer is formed based on the negative electrode sheet after etching treatment, the density of the solid electrolyte layer is denoted as K_{E}, satisfying K_{E} ≥ 90%, and an etching depth is 1 µm to 50 µm. Optionally, K_{E} ≥ 97%, and the etching depth is 3 µm to 40 µm.

By controlling the etching depth of the negative electrode sheet, the roughness of the negative electrode rough surface can be adjusted, such that the size of exhaust microchannels can be adjusted, and the solid electrolyte layer formed based on the etched negative electrode sheet has a higher density. In addition, the materials at the interface can be more sufficiently engaged with each other, which is also beneficial for improving the density of the solid electrolyte layer. Controlling the etching depth to be 3 µm to 40 µm is more beneficial for providing exhaust microchannels of the suitable size and promoting more fully mutual engagement of the interface materials, and is more beneficial for improving the density of the solid electrolyte layer.

In the present application, unless otherwise specified, the etching depth may be controlled by controlling one or more of parameters such as etching time, etching power, and the number of etching processes. Reference can also be made to the more detailed description below.

It may be understood that the etching depth does not exceed the initial thickness of the etched substrate. In some implementations, the etching depth is less than or equal to 60% of the initial thickness, optionally less than or equal to 50% of the initial thickness, and further optionally 0.5% to 50% of the initial thickness. Without limitation, the percentage of the etching depth relative to the initial thickness may be any one of the following percentages or selected from an interval defined by any two of the following percentages: 0.5%, 1%, 2%, 4%, 5%, 6%, 8%, 10%, 15%, 20%, 25%, 30%, 35%, 40%, and the like.

In the present application, when the etching depth is controlled to be 1 µm to 50 µm, the etching depth may further be any one of the following etching depths, or may be selected from an interval defined by any two of the following etching depths: 1 µm, 1.2 µm, 1.4 µm, 1.5 µm, 1.6 µm, 1.8 µm, 2 µm, 2.2 µm, 2.4 µm, 2.5 µm, 2.6 µm, 2.8 µm, 3 µm, 4 µm, 5 µm, 6 µm, 8 µm, 10 µm, 12 µm, 14 µm, 15 µm, 16 µm, 18 µm, 20 µm, 22 µm, 24 µm, 25 µm, 26 µm, 28 µm, 30 µm, 32 µm, 34 µm, 35 µm, 36 µm, 38 µm, 40 µm, 41 µm, 42 µm, 43 µm, 44 µm, 45 µm, 46 µm, 47 µm, 48 µm, 49 µm, 50 µm, and the like.

In the present application, when the etching depth is 3 µm to 40 µm, the etching depth may further be any one of the following etching depths, or may be selected from an interval defined by any two of the following etching depths: 3 µm, 4 µm, 5 µm, 6 µm, 8 µm, 10 µm, 12 µm, 14 µm, 15 µm, 16 µm, 18 µm, 20 µm, 22 µm, 24 µm, 25 µm, 26 µm, 28 µm, 30 µm, 32 µm, 34 µm, 35 µm, 36 µm, 38 µm, 40 µm, and the like.

Without limitation, a scanning electron microscope (SEM) may be used to observe the cross-section of the etched sample to determine the etching depth.

In some implementations, a preparation method for a solid-state battery is provided, including the steps as follows.

S210: Perform etching treatment on an initial positive electrode active layer located on at least one side surface of a positive electrode sheet to form a positive electrode rough surface having positive electrode concave portions, the positive electrode sheet after the etching treatment including positive electrode convex portions corresponding to the positive electrode concave portions. The initial positive electrode active layer includes a degradable organic component. After the etching treatment, the content of the degradable organic component in the positive electrode convex portion decreases.

S220: Provide an electrolyte pre-coating layer on the positive electrode rough surface, and compress the electrolyte pre-coating layer, thereby allowing the positive electrode convex portions and the portions of the electrolyte pre-coating layer filled in the corresponding positive electrode concave portions to jointly form a positive electrode interface functional layer, and allowing the remaining portion of the electrolyte pre-coating layer to form a solid electrolyte layer.

S230: Form a negative electrode layer on one side surface that is of the solid electrolyte layer and that is away from the positive electrode interface functional layer.

After the etching treatment in step S210, the unetched portion of the positive electrode sheet can form a positive electrode layer in the prepared solid-state battery.

In step S210, the remaining portion of the initial positive electrode active layer, excluding the portions forming the positive electrode convex portions, serves as a positive electrode active material layer, corresponding to the unetched portion of the initial positive electrode active layer.

In step S220, the "remaining portion of the electrolyte pre-coating layer" has the same meaning as that in the foregoing step S20.

In some implementations, the positive electrode sheet is a self-supporting positive electrode sheet composed of the initial positive electrode active layer, that is, the positive electrode sheet is an initial positive electrode active layer film.

In some implementations, the positive electrode sheet includes a positive electrode current collector and an initial positive electrode active layer located on at least one side of the positive electrode current collector.

In some implementations, the positive electrode sheet includes a positive electrode current collector and an initial positive electrode active layer located on at least one side surface of the positive electrode current collector. The initial positive electrode active layer may be located on one side or both sides of the positive electrode current collector. In a preparation method for a solid-state battery of some implementations, the positive electrode sheet used includes a positive electrode current collector and an initial positive electrode active layer located on one side surface of the positive electrode current collector. In some implementations, in the prepared solid-state battery, the positive electrode current collector and the positive electrode active material layer jointly constitute a positive electrode layer.

The solid electrolyte layer and the positive electrode layer may be sequentially prepared on the positive electrode sheet with the initial positive electrode active layer containing the degradable organic component, and the degradable organic component is partially or completely removed by performing the etching treatment on the initial positive electrode active layer located on the surface of the positive electrode sheet, such that the content of the organic component decreases. On the one hand, the content of an inorganic component in an etched region on the surface of the positive electrode may increase with the decrease of the content of the organic component, thereby improving the conductivity of the surface of the positive electrode, reducing interface impedance, and improving the electrochemical performance of the battery, including cycle performance and the like. In addition, it is further beneficial for improving discharge capacity and rate performance. On the other hand, the positive electrode rough surface having the positive electrode concave portions can be formed on the surface of the positive electrode. When the solid electrolyte layer is further prepared, microchannels capable of exhausting gas can be formed between the formed solid electrolyte layer and the positive electrode rough surface, and during subsequent compressing (such as warm isostatic pressing treatment), these microchannels can be used to exhaust gas, thereby improving the degree of compaction of the solid electrolyte layer and improving the density of the formed solid electrolyte layer. In addition, the positive electrode rough surface can further increase contact area with the solid electrolyte layer, which is further beneficial for reducing interface impedance, thereby improving the battery performance, at least including the cycle performance of the battery.

In some implementations, when the solid electrolyte layer is formed based on the positive electrode sheet after etching treatment, the density of the solid electrolyte layer is denoted as K_{E}, satisfying K_{E} ≥ 90%, and an etching depth is 1 µm to 50 µm. Optionally, K_{E} ≥ 97%, and the etching depth is 3 µm to 40 µm.

By controlling the etching depth of the positive electrode sheet, the roughness of the positive electrode rough surface can be adjusted, such that the exhaust microchannel has a suitable size, and the solid electrolyte layer formed based on the positive electrode sheet after etching treatment has a higher density. In addition, the materials at the interface can be more sufficiently engaged with each other, which is also beneficial for improving the density of the solid electrolyte layer. Controlling the etching depth to be 3 µm to 40 µm is more beneficial for providing exhaust microchannels of the suitable size and promoting more fully mutual engagement of the interface materials, and is more beneficial for improving the density of the solid electrolyte layer.

In the foregoing method, the method for forming the electrolyte pre-coating layer may be a dry method or a wet method. When the wet method is used for preparation, an electrolyte slurry including a solid electrolyte and an organic solvent needs to be prepared. Without limitation, the organic solvent in the electrolyte slurry may include one or more of p-xylene, trimethylbenzene, butyl butyrate, heptane, and the like, and may further be p-xylene. To improve the dispersibility of the solid particles in the slurry, appropriate amounts of auxiliary agents such as an organic binder and an organic dispersant may be added to the electrolyte slurry.

In some implementations, a preparation method for a solid-state battery is provided, including the steps as follows.

S110: Provide a solid electrolyte film including a first surface and a second surface facing away from each other, where the solid electrolyte film includes a degradable organic component.

S120: Perform etching treatment on the first surface of the solid electrolyte film to form a first rough surface having first concave portions, the solid electrolyte film after the etching treatment including first convex portions corresponding to the first concave portions. After the etching treatment, the content of the degradable organic component in the first convex portion decreases.

S130: Provide a first electrode pre-coating layer on the first surface of the solid electrolyte film after the etching treatment, and compress the first electrode pre-coating layer, thereby allowing the first convex portions and the portions of the first electrode pre-coating layer filled in the corresponding first concave portions to jointly form a first interface functional layer, and allowing the remaining portion of the first electrode pre-coating layer to form a first electrode layer.

S140: Form a second electrode layer on the second surface of the solid electrolyte film.

In the present application, unless otherwise specified, in step S130, the "remaining portion of the first electrode pre-coating layer" refers to the portion of the first electrode pre-coating layer that is not filled in the first concave portions, and unless otherwise specified, may be understood as the portion that is not in contact with the first rough surface in the thickness direction of the first electrode pre-coating layer.

Two electrode layers may be sequentially prepared on the solid electrolyte film containing the degradable organic component, and the degradable organic component is partially or completely removed by performing etching treatment on the surface of the solid electrolyte film, such that the content of the organic component decreases. On the one hand, the content of an inorganic component in an etched region on the surface of the solid electrolyte film may increase with the decrease of the content of the organic component, thereby improving the conductivity of the surface of the solid electrolyte film, reducing interface impedance, and improving the electrochemical performance of the battery, including cycle performance and the like. In addition, it is further beneficial for improving discharge capacity and rate performance. On the other hand, the first rough surface having the concave portions may be formed on the surface of the solid electrolyte film. When the first electrode layer is further prepared, microchannels capable of exhausting gas may be formed between the formed first electrode layer and the first rough surface, and during subsequent compressing (such as warm isostatic pressing treatment), these microchannels may be used to exhaust gas, thereby improving the degree of compactness of the first electrode layer and improving the density of the formed first electrode layer. In addition, the first rough surface may further increase contact area with the first electrode layer, which is further beneficial for reducing interface impedance, thereby improving the battery performance, at least including the cycle performance of the battery.

In some implementations, forming the second electrode layer on the second surface of the solid electrolyte film includes the steps as follows.

S150: Perform etching treatment on the second surface of the solid electrolyte film to form a second rough surface having second concave portions, the solid electrolyte film after the etching treatment including second convex portions corresponding to the second concave portions. After the etching treatment, the content of the degradable organic component in the second convex portion decreases.

S160: Provide a second electrode pre-coating layer on the second surface of the solid electrolyte film after the etching treatment, and compress the second electrode pre-coating layer, thereby allowing the second convex portions and the portions of the second electrode pre-coating layer filled in the corresponding second concave portions to jointly form a second interface functional layer, and allowing the remaining portion of the second electrode pre-coating layer to form a second electrode layer.

In the present application, unless otherwise specified, in step S160, the "remaining portion of the second electrode pre-coating layer" refers to the portion of the first electrode pre-coating layer that is not filled in the second concave portions, and unless otherwise specified, may be understood as the portion that is not in contact with the second rough surface in the thickness direction of the second electrode pre-coating layer.

When the second electrode is formed on the other side of the solid electrolyte film, etching treatment may also be performed on the surface of the solid electrolyte film to decrease the content of the degradable organic component in an etched region and form the second rough surface, thereby improving the conductivity of the surface of the solid electrolyte film, reducing interface impedance, and forming microchannels capable of exhausting gas between the formed second electrode layer and the second rough surface. During subsequent compressing (such as warm isostatic pressing treatment), these microchannels can be used to exhaust gas, thereby improving the degree of compactness of the second electrode layer and improving the density of the formed second electrode layer. In addition, the second rough surface can further increase contact area with the second electrode layer, which is further beneficial for reducing interface impedance, thereby improving the battery performance, at least including the cycle performance of the battery.

In the foregoing method, the method for forming the first electrode pre-coating layer or the second electrode pre-coating layer may be a dry method or a wet method. When the wet method is used for preparation, a corresponding electrode slurry needs to be prepared. Reference can be made to the foregoing preparation methods for the positive electrode slurry and the negative electrode slurry.

In some implementations, the first electrode layer is a positive electrode layer, or the first electrode layer is a negative electrode layer.

Based on the solid electrolyte film, the positive electrode layer may be formed first, or the negative electrode layer may be formed first.

In some implementations, before the positive electrode layer is formed, etching treatment is performed on one side surface that is of the solid electrolyte film and that is close to the positive electrode layer. The density of the positive electrode layer is denoted as K_{P}, satisfying K_{P} ≥ 90%, and an etching depth is 1 µm to 50 µm. Optionally, K_{P} ≥ 97%, and the etching depth is 3 µm to 40 µm.

Controlling the etching depth of the solid electrolyte film can adjust the density of the positive electrode layer formed based on the solid electrolyte film after etching treatment.

In some implementations, before the negative electrode layer is formed, etching treatment is performed on one side surface that is of the solid electrolyte film and that is close to the negative electrode layer. The density of the negative electrode layer is denoted as K_{N}, satisfying K_{N} ≥ 90%, and an etching depth is 1 µm to 50 µm. Optionally, K_{N} ≥ 97%, and the etching depth is 3 µm to 40 µm.

Controlling the etching depth of the solid electrolyte film can adjust the density of the negative electrode layer formed based on the solid electrolyte film after etching treatment.

In some implementations, etching manners for the etching treatment include one or more of plasma treatment and laser treatment.

In some implementations, etching manners for the etching treatment include one or more of oxygen plasma treatment and infrared laser treatment.

For a person skilled in the art, based on the selected etching manner, the selected composition of the etched substrate, and the required etching depth, a person skilled in the art can select a suitable etching device to complete the required etching treatment.

Taking plasma treatment as an example, a person skilled in the art may use, but not limited to, oxygen plasma etching. The oxygen plasma etching may be performed using an inductively coupled plasma (ICP) etching machine. Further, during oxygen plasma etching, the etching effect may be adjusted by controlling one or more of the following parameters: ICP power, bias power, oxygen flow, chamber pressure, etching time, radio frequency, substrate temperature, electrode indirection, and the like. As an exemplary description, the density and energy of plasma may be regulated by adjusting the ICP power, thereby affecting the etching rate and uniformity. By regulating the etching time, the etching depth can be substantially directly determined under the condition that the other etching parameters are the same, and can be used to accurately control the required etching amount. By adjusting the bias power, the bombardment energy and direction of ions on the surface of the sample can be regulated, thereby affecting the etching anisotropy and the degree of surface damage. The rate of a chemical reaction can be adjusted by regulating an oxygen flow. By regulating the chamber pressure, the collision frequency of the plasma and the mean free path of the particles can be adjusted, thereby affecting the etching effect. In the present application, the etching depth may be adjusted by mainly adjusting one or more of the following parameters: ICP power, etching time, the number of etching processes, and the like, but are not limited thereto, and other parameters may be adjusted supplementarily or adaptively. For example, the ICP power and the bias power usually need to be coordinated and balanced with each other, and in the case where the ICP power is selected, a person skilled in the art can select a suitable bias power.

For oxygen plasma etching, unless otherwise specified, the etching power refers to the ICP power.

Without limitation, the plasma treatment may be performed in the following manner. In the presence of oxygen, the plasma treatment is performed for 1s to 60s. The gas atmosphere may include one or more of argon, hydrogen, and the like in addition to oxygen. Without limitation, taking oxygen plasma etching as an example, the ICP etching power may be 500 W to 10 kW, and further 3 kW to 10 kW, but is not limited thereto. The bias power may be 10 W to 1000 W, and further may be 50 W to 500 W, but is not limited thereto. The condition of the chamber pressure may be 1 mTorr to 50 mTorr, and further may be 3 mTorr to 20 mTorr, but is not limited thereto. Each etching time may be 1s to 60s, further optionally may be 10s to 60s, and even further optionally may be 10s to 30s, but is not limited thereto. The oxygen flow rate may be 2 sccm to 40 sccm, and optionally may be 2 sccm to 30 sccm, but is not limited thereto. Without limitation, the etching time may be any one of the following time or selected from an interval defined by any two of the following time: 5s, 6s, 8s, 10s, 15s, 20s, 25s, 30s, 35s, 40s, 45s, 50s, 55s, 60s, and the like.

In the present application, 1 mTorr corresponds to the pressure of 1 micrometer of mercury, which is one thousandth of the pressure of 1 millimeter of mercury. 1 mTorr is approximately equal to 0.133 Pa.

In the present application, sccm is the unit of a gas flow, which is called standard cubic centimeter per minute, and represents the flow of 1 cubic centimeter per minute.

Taking laser etching as an example, a person skilled in the art may use, but not limited to, an infrared laser etching manner. During laser etching, the etching effect may be adjusted by controlling one or more of the following parameters: laser power, scanning speed, pulse frequency, focused spot size, the number of repetitions, and the like. As an exemplary description, the laser power may be used to regulate the etching rate and the etching depth. The scanning speed may be used to adjust the moving speed of laser on the surface of the material. The pulse frequency may affect energy injection per unit time. The focused spot size may affect the etching accuracy. In the present application, the etching depth may be adjusted by mainly adjusting one or more of the following parameters: laser power, etching time, the number of etching processes, and the like, but are not limited thereto, and other parameters may be adjusted supplementarily or adaptively.

For laser etching, unless otherwise specified, the etching power refers to the laser power.

Without limitation, the laser treatment may be performed in the following manner, but is not limited thereto. Laser with the wavelength of 0.75 µm to 14 µm is used to perform laser treatment. Without limitation, the etching power may be 5 kW to 20 kW, but is not limited thereto. Each etching time may be 1s to 60s, but is not limited thereto. Without limitation, each etching time may be any one of the following time or selected from an interval defined by any two of the following time: 5s, 6s, 8s, 10s, 15s, 20s, 25s, 30s, 35s, 40s, 45s, 50s, 55s, 60s, and the like. In some implementations, laser with a wavelength of 3 µm to 5 µm is used to perform laser treatment, and each etching time is 1s to 60s.

It may be understood that when the required etching depth is large, for example, when the etching depth exceeds 5 µm, the etching may be performed for multiple times to reach the required etching depth.

Without limitation, when the oxygen plasma treatment is performed on the negative electrode sheet, an etching power of 3 kW to 8 kW may be used. When the plasma treatment is performed on the positive electrode sheet, an etching power of 5 kW to 10 kW may be used. When the plasma treatment is performed on the solid electrolyte film, an etching power of 3 kW to 8 kW may be used.

Without limitation, when the laser treatment is performed on the negative electrode sheet, the power may be set to 5 kW to 10 kW. When the laser treatment is performed on the positive electrode sheet, an etching power of 10 kW to 20 kW may be used. When the laser treatment is performed on the solid electrolyte film, an etching power of 5 kW to 10 kW may be used.

According to a third aspect of the present application, an electrical device is provided, including at least one of the solid-state battery according to the first aspect of the present application and the solid-state battery prepared by the preparation method for a solid-state battery according to the second aspect of the present application.

In some implementations, the electrical device includes at least one of the solid-state battery according to any implementation of the present application.

Without limitation, the solid-state battery may be used as a power supply for the electrical device, or as an energy storage unit for the electrical device. The electrical device may include, but is not limited thereto, a mobile device, an electric vehicle, an electric train, a ship, a satellite, an energy storage system, and the like. The mobile device may be, for example, a mobile phone, a notebook computer, or the like. The electric vehicle may be, for example, a full electric vehicle, a hybrid electric vehicle, a plug-in hybrid electric vehicle, an electric bicycle, an electric scooter, an electric golf cart, an electric truck, an electric motorcycle, an electric tool, or the like, but is not limited thereto. The electrical device may also be applied to the fields of military equipment, aerospace, and the like, as well as to energy storage power systems for hydroelectric, thermal, wind, and solar power stations.

As an electrical device, the solid-state battery may be selected according to use requirements of the electrical device.

FIG. 14 shows an electrical device 6 as an example. The electrical device is a pure electric vehicle, a hybrid electric vehicle, a plug-in hybrid electric vehicle, or the like. To meet the demand for high power and high energy density of a solid-state battery by the electrical device, a battery pack or a battery module may be used.

In another example, the electric apparatus may be a cell phone, a tablet computer, a notebook computer, or the like. The device is generally required to be thin and lightweight, and may use a solid-state battery as a power supply.

Examples of the present application are described below. The examples described below are illustrative only and are not to be construed as limiting the present application. In the embodiments, specific techniques or conditions are not indicated, and they are performed according to techniques or conditions described above, according to techniques or conditions described in documents in the art, or according to the specification of the product. The reagents or instruments used without specifying the manufacturer(s) are commercially available conventional products, or can be synthesized from commercially available products by a conventional mode.

In the following embodiments, the "room temperature" refers to 20°C to 30°C.

Unless otherwise specified, the "approximation" expressed in micrometers (µm) or nanometers (nm) involved in the following examples are counted as follows. For numerical values accurate to single digits between 1 and 9, the fluctuation range is within ± 0.5. For numerical values accurate to single digits between 10 and 99, the fluctuation range is within ± 1.

It should be noted that in each of the following implementations and embodiments, an all-solid-state battery is used as a non-limiting example of the solid-state battery, where the composition of raw materials is used as a non-limiting example, for example, a sulfide solid electrolyte is used as a non-limiting example of the solid electrolyte.

In the following examples, unless otherwise specified, operations or reaction steps using the sulfide solid electrolyte material as the raw material are performed in an argon gas atmosphere.

In the following examples, unless otherwise specified, the sulfide solid electrolyte material is dispersed in an organic solvent, and the organic solvent may be one or more of p-xylene, trimethylbenzene, butyl butyrate, heptane, and the like, and may further be p-xylene.

In the following examples, unless otherwise specified, Dᵥ50 of the positive electrode active particle NCM811 powder is 4 µm (the positive electrode active material is NCM₈₁₁). Dᵥ50 of the sulfide solid electrolyte Li₆PS₅Cl is 1 µm. Dᵥ50 of the silicon oxide (SiOx) is 4.5 µm. Unless otherwise specified, the values of x in silicon oxide SiOx are substantially the same, and x is within the range of 1 to 2.

In the present application, unless otherwise specified, Dᵥ50 represents the particle size at which the cumulative volume distribution percentage of the multi-particle mixture reaches 50%.

### Dᵥ50 test:

In the following examples and comparative examples, the Dᵥ50 of the solid raw material can be tested and confirmed using the following method: Device model: Malvern 2000 (MasterSizer 2000) laser particle sizer. Reference standard procedure: GB/T19077-2016/ISO 13320:2009. Detailed test procedure: An appropriate amount of a sample to be tested is taken (with a sample concentration sufficient to ensure 8-12% (w/v) opacity), 20 m1 of an organic solvent (such as p-xylene) is added, and external ultrasonication is performed in an ultrasonic bath for 5 min(53 KHz/120 W) to ensure full dispersion of the sample. Then, the sample is measured according to the GB/T19077-2016/ISO 13320:2009 standard. A dispersant polycarboxylic acid is further added when testing the sulfide solid electrolyte.

In the following examples, parameters that are not described in the conditions for performing plasma etching or laser etching are consistent in different examples or may be adjusted accordingly according to selected parameters. When the required etching depth is relatively large, for example, when the etching depth exceeds 5 µm, etching may be performed for multiple times to reach the required etching depth, and each etching time may be 10s to 30s, or other suitable etching time may be used.

**Example** 1. A negative electrode sheet was etched to form a solid electrolyte layer and a positive electrode layer, and etching was performed by plasma treatment.

### 1. Preparation of the negative electrode sheet

In an argon atmosphere, negative electrode active particles silicon oxide (SiOx), sulfide solid electrolyte powder Li₆PS₅Cl and a binder polyvinylidene fluoride (PVDF) were dispersed in a solvent p-xylene (with a solid content of 60 wt%) at a mass ratio of 80:17:3 to obtain a negative electrode slurry. The negative electrode slurry was coated on one side of a copper foil at a coating areal density of 4.5 mg/cm ² based on a dry weight (excluding the solvent), dried and cold-pressed to obtain the negative electrode sheet. The negative electrode sheet includes a negative electrode current collector copper foil and an initial negative electrode active layer located on one side of the negative electrode current collector. The thickness of the initial negative electrode active layer was about 39 µm.

### 2. Etching treatment: Oxygen plasma etching was performed.

In an oxygen atmosphere, with an ICP etching power of 5 kW, a chamber pressure of 10 mTorr, and an oxygen flow of 20 sccm, the initial negative electrode active layer was etched to a target etching depth (see Table 1). Degradation products formed by etching were removed by negative pressure. After the etching treatment, a negative electrode rough surface was formed. The remaining portion of an etched region formed negative electrode convex portions. Concave regions formed between the negative electrode convex portions were negative electrode concave portions. The unetched initial negative electrode active layer corresponded to a negative electrode active material layer. The copper foil and the negative electrode active material layer jointly constituted a negative electrode layer.

### 3. Formation of the solid electrolyte layer.

The sulfide solid electrolyte powder Li₆PS₅Cl was laid on one side of the initial negative electrode active layer of the negative electrode sheet, and cold-pressed at a pressure of 360 MPa for 5 min to form a film. A negative electrode interface functional layer was formed at the position of the negative electrode rough surface, including a first sublayer on a negative electrode side and a second sublayer on a solid electrolyte layer side. The solid electrolyte layer was connected to the negative electrode active material layer through the second sublayer. The thickness of the solid electrolyte powder was about 90 µm.

### 4. Formation of the positive electrode layer.

In an argon atmosphere, positive electrode active particles LiNi_{0.8}Co_{0.1}Mn_{0.1}O₂ (NCM811), a sulfide solid electrolyte Li₆PS₅Cl, a conductive agent VGCF (vapor-grown carbon fibers), and a binder polytetrafluoroethylene (PTFE) were uniformly dispersed in a solvent p-xylene at a mass ratio of 85:13:1:1 to obtain a positive electrode slurry. The positive electrode slurry was coated on the exposed surface of the solid electrolyte layer and dried to form the positive electrode layer. The coating areal density of the positive electrode slurry based on a dry weight (excluding the solvent) was about 30 mg/cm².

**Example** 2. A negative electrode sheet was etched to form a solid electrolyte layer and a positive electrode layer, and etching was performed by laser treatment.

A preparation method substantially the same as that in Example 1 was used, with the main difference that in step 2, etching was changed to be performed by laser treatment, and laser with a wavelength of about 4 µm was used to etch to reach a target etching depth (see Table 1), with an etching power of 8 kW. The remaining steps were the same as those in Example 1.

**Examples** 3 to 5. A preparation method substantially the same as that in Example 1 was used, with the main difference as follows. One or more of the types and amounts of organic components in a negative electrode sheet were changed. In Examples 3 to 5, the mass ratios of a negative electrode active material and a solid electrolyte were substantially the same, and the areal loading density of sulfide solid electrolyte powder in step 3 was substantially the same as that in Example 1. Also see Table 1.

Example 3. A negative electrode slurry was changed as follows. Negative electrode active particles, sulfide solid electrolyte powder Li₆PS₅Cl, and a binder polyacrylic acid (PAA) were dispersed in a solvent p-xylene (with the solid content of about 60 wt%) at a mass ratio of 80.8:17.2:2 to obtain the negative electrode slurry.

Example 4. A negative electrode slurry was changed as follows. Negative electrode active particles, sulfide solid electrolyte powder Li₆PS₅Cl, and a binder PVDF were dispersed in a solvent p-xylene (with the solid content of about 60 wt%) at a mass ratio of 75.9:16.1:8 to obtain the negative electrode slurry.

Example 5. A negative electrode slurry was changed as follows. Negative electrode active particles, sulfide solid electrolyte powder Li₆PS₅Cl, and a binder PVDF were dispersed in a solvent p-xylene (with the solid content of about 60 wt%) at the mass ratio of 74.2:15.8:8:2 to obtain the negative electrode slurry.

**Examples** 6 to 9. A method substantially the same as that in Example 1 was used, with the difference as follows. One or two of etching power and etching time were changed to adjust an etching depth. See Table 1.

**Example 10.** A positive electrode sheet was etched to form a solid electrolyte layer and a negative electrode layer, and etching was performed by plasma treatment.

### 1. Preparation of a positive electrode sheet

In an argon atmosphere, raw materials including LiNi_{0.8}Co_{0.1}Mn_{0.1}O₂ (NCM811), a sulfide solid electrolyte Li₆PS₅Cl, a conductive agent VGCF (vapor-grown carbon fibers), and a binder polytetrafluoroethylene (PTFE) were weighed at a mass ratio of 85:13:1:1, and mixed uniformly in a dual planetary mixer. Uniformly mixed powder was heated, pressurized and kneaded into a doughy material in an internal mixer. Then, the doughy material was hot-rolled at 80°C to form a self-supporting positive electrode sheet (serving as an initial positive electrode active layer), and then laminated with a positive electrode current collector Al foil by hot rolling to obtain the positive electrode sheet. The positive electrode sheet includes the positive electrode current collector and the initial positive electrode active layer located on one side of the positive electrode current collector. The initial positive electrode active layer has an areal density of about 30 mg/cm², a thickness of about 91 µm.

### 2. Etching treatment: Oxygen plasma etching was performed.

In an oxygen atmosphere, with an etching power of 8 kW, a chamber pressure of 15 mTorr, and an oxygen flow of 25 sccm, the initial positive electrode active layer was etched to a target etching depth (see Table 1). Degradation products formed by etching were removed by negative pressure. After etching, a positive electrode rough surface was formed. The remaining portion of an etched region forms positive electrode convex portions. Concave regions formed between the positive electrode convex portions were positive electrode concave portions. The unetched initial positive electrode active layer corresponded to the positive electrode active material layer. The positive electrode current collector aluminum foil, and the positive electrode active material layer jointly constitute a positive electrode layer.

### 3. Formation of the solid electrolyte layer.

The sulfide solid electrolyte powder Li₆PS₅Cl was laid on one side of the initial positive electrode active layer of the positive electrode sheet, and cold-pressed at a pressure of 360 MPa for 5 min to form a film. A positive electrode interface functional layer was formed at the position of the positive electrode rough surface, including a first sublayer on the positive electrode side and a second sublayer on the solid electrolyte layer side. The solid electrolyte layer was connected to the positive electrode active material layer through the second sublayer.

The amount of the solid electrolyte powder used per unit area was the same as that in Example 1.

### 4. Formation of a negative electrode layer.

In an argon atmosphere, negative electrode active particles silicon oxide, sulfide solid electrolyte powder Li₆PS₅Cl, and a binder PVDF were dispersed in a solvent p-xylene (with the solid content of 60 wt%) at a mass ratio of 80:17:3 to obtain a negative electrode slurry. The negative electrode slurry was coated on the exposed surface of the solid electrolyte layer and dried to form the negative electrode layer. The coating areal density of the negative electrode slurry based on a dry weight (excluding the solvent) was about 4.5 mg/cm², which was close to the coating areal density of the initial negative electrode active layer in Example 1.

**Example 11.** A method substantially the same as that in Example 10 was used, with the difference as follows. Etching power and etching time were changed to adjust an etching depth. See Table 1.

**Example 12.** One side of a solid electrolyte film was etched to form a positive electrode layer.

### 1. Preparation of a solid electrolyte film

A sulfide electrolyte Li₆PS₅Cl powder and a binder PVDF were uniformly mixed at a mass ratio of 97:3, and were pre-compressed at 100 MPa without holding the pressure.

The amount of the solid electrolyte Li₆PS₅Cl per unit area was the same as that in step 3 of Example 1.

### 2. Single-sided etching was performed on a first surface: oxygen plasma treatment.

In an oxygen atmosphere, one side surface (the first surface) of the solid electrolyte film was etched to a target etching depth at an etching power of 5 kW, a chamber pressure of 10 mTorr, and an oxygen flow of 20 sccm (see Table 1). Degradation products formed by etching were removed by negative pressure. After etching, a first rough surface was formed. The remaining portion of an etched region forms first convex portions. Concave regions formed between the first convex portions were first concave portions. The unetched portion of the solid electrolyte film corresponded to a solid electrolyte layer.

### 3. Formation of a positive electrode layer based on the etched first surface.

In an argon atmosphere, positive electrode active particles LiNi_{0.8}Co_{0.1}Mn_{0.1}O₂ (NCM811), a sulfide solid electrolyte Li₆PS₅Cl, a conductive agent VGCF (vapor-grown carbon fibers), and a binder polytetrafluoroethylene (PTFE) were uniformly dispersed in a solvent p-xylene at a mass ratio of 85:13:1:1 to obtain a positive electrode slurry The positive electrode slurry was coated on the first rough surface, dried, and cold-pressed at a pressure of 360 MPa for 5 min to form a film, thereby forming the positive electrode layer. A positive electrode interface functional layer was formed between the positive electrode layer and the solid electrolyte layer.

The coating areal density of the positive electrode slurry was substantially the same as that in Step 4 of Example 1.

### 4. Formation of a negative electrode layer based on an unetched second surface.

In an argon atmosphere, negative electrode active particles silicon oxide, sulfide solid electrolyte powder Li₆PS₅Cl, and a binder PVDF were dispersed in a solvent p-xylene (with the solid content of 60 wt%) at a mass ratio of 80:17:3 to obtain a negative electrode slurry. The negative electrode slurry was coated on the exposed surface of the solid electrolyte layer and dried to form the negative electrode layer.

The coating areal density of the negative electrode slurry was substantially the same as that in Step 4 of Example 10.

**Example 13.** Two sides of a solid electrolyte film were etched to successively form a positive electrode layer and a negative electrode layer.

A method substantially the same as that in Example 12 was used, with the difference that in an etching step, step 2, a second surface was further etched to form a second rough surface. The remaining portions of an etched region on one side of the second rough surface formed second convex portions. Concave regions formed between the second convex portions were second concave portions. The unetched portion of the solid electrolyte film corresponded to a solid electrolyte layer. In step 4, the negative electrode layer was formed based on the etched second surface.

### 1. Preparation of a solid electrolyte film

A sulfide electrolyte Li₆PS₅Cl powder and a binder PVDF were uniformly mixed at a mass ratio of 97:3, and were pre-compressed at 100 MPa without holding the pressure.

The amount of the solid electrolyte Li₆PS₅Cl per unit area was the same as that in step 1 of Example 12.

### 2. Double-sided etching was performed on a first surface and the second surface: oxygen plasma treatment.

In an oxygen atmosphere, etching parameters for the first surface and the second surface were consistent: The first surface and the second surface were respectively etched to target etching depths at an etching power of 5 kW, a chamber pressure of 10 mTorr, and an oxygen flow of 20 sccm (see Table 1).

The first surface was etched to form a first rough surface, the remaining portion of an etched region formed first convex portions, and concave regions between the first convex portions were first concave portions.

The second surface was etched to form a second rough surface, the remaining portion of an etched region formed second convex portions, and concave regions between the second convex portions were second concave portions.

The unetched portion of the solid electrolyte film corresponded to the solid electrolyte layer, and the negative electrode layer was formed based on the etched second surface.

### 3. Formation of a positive electrode layer based on the etched first surface.

In an argon atmosphere, positive electrode active particles LiNi_{0.8}Co_{0.1}Mn_{0.1}O₂ (NCM811), a sulfide solid electrolyte Li₆PS₅Cl, a conductive agent VGCF (vapor-grown carbon fibers), and a binder polytetrafluoroethylene (PTFE) were uniformly dispersed in a solvent p-xylene at a mass ratio of 85:13:1:1 to obtain a positive electrode slurry The positive electrode slurry was coated on the first rough surface and dried.

The coating areal density of the positive electrode slurry was substantially the same as that in step 3 of Example 12.

In an argon atmosphere, negative electrode active particles silicon oxide, sulfide solid electrolyte powder Li₆PS₅Cl, and a binder PVDF were dispersed in a solvent p-xylene (with the solid content of 60 wt%) at a mass ratio of 80:17:3 to obtain a negative electrode slurry The negative electrode slurry was coated on the second rough surface and dried.

Cold-pressing was performed at a pressure of 360 MPa for 5 min to form the positive electrode layer and the negative electrode layer. A positive electrode interface functional layer was formed between the positive electrode layer and the solid electrolyte layer, and a negative electrode interface functional layer was formed between the negative electrode layer and the solid electrolyte layer.

The coating areal density of the negative electrode slurry was substantially the same as that in step 4 of Example 12.

**Example 14.** A method substantially the same as that in Example 1 was used, with the difference that an intermediate functional layer containing no organic component was separately introduced; and in this example, a solid-state battery includes a negative electrode layer, the intermediate functional layer, a solid electrolyte layer, and a positive electrode layer that were sequentially stacked.

### 1. Preparation of the negative electrode sheet

In an argon atmosphere, negative electrode active particles silicon oxide, sulfide solid electrolyte powder Li₆PS₅Cl, and a binder PVDF were dispersed in a solvent p-xylene (with the solid content of 60 wt%) at a mass ratio of 80:17:3 to obtain a negative electrode slurry. The negative electrode slurry was coated on the one side of the copper foil, dried, and cold-pressed to obtain a negative electrode sheet. The negative electrode sheet includes a negative electrode current collector copper foil and a negative electrode active material layer located on one side of the negative electrode current collector.

The coating areal density of the negative electrode slurry based on a dry weight (excluding the solvent) was 4.5 mg/cm², and the thickness of the negative electrode active material layer was controlled to be about 27 µm.

### 2. Preparation of the intermediate functional layer and the solid electrolyte layer

In an argon atmosphere, negative electrode active particles silicon oxide, sulfide solid electrolyte powder Li₆PS₅Cl, and a binder PVDF were uniformly mixed at a mass ratio of 80:19:1. The mixture was laid on a negative electrode active material layer and cold-pressed at a pressure of 360 MPa for 3 min to form a film. The intermediate functional layer with a thickness of about 12 µm was formed, which was substantially the same as the thickness of the negative electrode interface functional layer in Example 1.

### 3. Formation of the solid electrolyte layer.

Sulfide solid electrolyte powder Li₆PS₅Cl was laid on the exposed side of the intermediate functional layer, and cold-pressed at a pressure of 360 MPa for 5 min to form a film.

In this example, the thickness of the solid electrolyte layer was controlled to be substantially the same as that in Step 3 of Example 1.

### 4. Formation of the positive electrode layer.

In an argon atmosphere, positive electrode active particles LiNi_{0.8}Co_{0.1}Mn_{0.1}O₂ (NCM811), a sulfide solid electrolyte Li₆PS₅Cl, a conductive agent VGCF (vapor-grown carbon fibers), and a binder polytetrafluoroethylene (PTFE) were uniformly dispersed in a solvent p-xylene at a mass ratio of 85:13:1:1 to obtain a positive electrode slurry. The positive electrode slurry was coated on the exposed surface of the solid electrolyte layer and dried to form the positive electrode layer.

The coating areal density of the positive electrode slurry was substantially the same as that in Step 4 of Example 1.

**Example 15.** A method substantially the same as that in Example 14 was used, with the difference that the mass ratio of negative electrode active particles silicon oxide and sulfide solid electrolyte powder Li₆PS₅Cl in Step 2 was consistent with that in the negative electrode layer.

Step 2: Preparation of the intermediate functional layer and the solid electrolyte layer.

In an argon atmosphere, negative electrode active particles silicon oxide and sulfide solid electrolyte powder Li₆PS₅Cl were uniformly mixed at a mass ratio of 80:17. The mixture was laid on a negative electrode active material layer and cold-pressed at a pressure of 360 MPa for 3 min to form a film.

The intermediate functional layer with a thickness of about 12 µm was formed, which was substantially consistent with the thickness of the intermediate functional layer in Example 14.

**Comparative Example** 1. An etching step was omitted based on Example 1.

**Comparative Example 2.** An etching step was omitted based on Example 10.

**Comparative Example 3.** A single-sided etching step was omitted based on Example 12.

**Comparative Example 4.** A double-sided etching step was omitted based on Example 13.

For the preparation parameters of the examples and the comparative examples, see Table 1 and Table 2.

**Table 1.**

| No. | Composition of etched structural layer | | | | | |
|---|---|---|---|---|---|---|
| | Etched structural layer | Electrode active substance content (wt%) | Electrolyte particle content (wt%) | | Organic component type | Organic component content (wt%) |
| Example 1 | Negative Electrode Sheet | 80 | 17 | | PVDF | 3 |
| Example 2 | Negative Electrode Sheet | The same as Example 1 | | | | |
| Example 3 | Negative Electrode Sheet | 80.8 | 17.2 | | PAA | 2 |
| Example 4 | Negative Electrode Sheet | 75.9 | 16.1 | | PVDF | 8 |
| Example 5 | Negative Electrode Sheet | 74.2 | 15.8 | | PVDF:PAA = 4:1 mass ratio | 10 |
| Example 6 | Negative Electrode Sheet | The same as Example 1 | | | | |
| Example 7 | Negative Electrode Sheet | The same as Example 1 | | | | |
| Example 8 | Negative Electrode Sheet | The same as Example 1 | | | | |
| Example 9 | Negative Electrode Sheet | The same as Example 1 | | | | |

| No. | Etched structural layer | Electrode active substance content (wt%) | Electrolyte particle content (wt%) | Content of conductive agent | Organic component type | Content/wt% |
|---|---|---|---|---|---|---|
| Example 10 | Positive electrode sheet | 85 | 13 | 1 | PTFE | 1 |
| Example 11 | Positive electrode sheet | 85 | 13 | 1 | PTFE | 1 |
| Example 12 | solid electrolyte film | | 97 | | PVDF | 3 |
| Example 13 | solid electrolyte film | | 97 | | PVDF | 3 |
| Example 14 | An etching step was omitted based on Example 1, and in an intermediate functional layer, the mass ratio of a negative electrode active substance: Li₆PS₅Cl: PVDF was 80:19:1 (based on the negative electrode interface functional layer in Example 1, the intermediate functional layer in this example adopted a sulfide solid electrolyte to replace a portion of the organic component) | | | | | |
| Example 15 | An etching step was omitted based on Example 1, and in an intermediate functional layer, the mass ratio of a negative electrode active substance: Li₆PS₅Cl was 80:17 (based on the negative electrode interface functional layer of Embodiment 1, the intermediate functional layer in this example had no organic component) | | | | | |
| Comparative Example 1 | An etching step was omitted based on Example 1 (equivalent to that a negative electrode interface functional layer was replaced by a negative electrode active material layer) | | | | | |
| Comparative Example 2 | An etching step was omitted based on Example 10 (equivalent to that a positive electrode interface functional layer was replaced by a positive electrode active material layer) | | | | | |
| Comparative Example 3 | An etching step was omitted based on Example 12 (equivalent to that a positive electrode interface functional layer was replaced by a solid electrolyte layer) | | | | | |
| Comparative Example 4 | An etching step was omitted based on Example 13 (equivalent to that a positive electrode interface functional layer and a negative electrode interface functional layer were replaced by solid electrolyte layers) | | | | | |

TABLE 1. The contents of the components refer to the mass percentages of the corresponding electrode active material layers.

### Performance Test and Analysis:

### (I) Characterization of an interface functional layer

### 1. Etching depth

A cross-section of a sample was observed by a scanning electron microscope ZEISS Sigma 300. A solid-state cell was quenched in the thickness direction using liquid nitrogen to obtain a sample to be tested.

### 2. Structural and compositional characterization

Test object: an interface functional layer, a first sublayer, and a second sublayer in a prepared solid-state battery, and an intermediate sample after the surface was etched during preparation.

Test method I: An FEI Scios 2HiVac device was used. Combining cryogenic focused ion beam (FIB) serial sectioning, cross-sectional SEM morphology observation, energy-dispersive X-ray spectroscopy (EDS) elemental mapping, and three-dimensional (3D) reconstruction software analysis, the nanoscale spatial dynamic resolution and layer-by-layer milling capability of FIB-SEM were utilized to finely section a sample (with section thicknesses down to the nanometer scale). During FIB serial sectioning, the morphology, structure, and elemental distribution of each cross-section were analyzed by a scanning electron microscope (SEM), and a three-dimensional structure of the sample was reconstructed combining 3D reconstruction software.

Test method II: A solid-state cell was quenched in the thickness direction using liquid nitrogen, followed by microscopic morphology observation of a cross-section. ZEISS Sigma 300 scanning electron microscope.

Test method III: Tomographic CT. Instrument: Phoenix V|tome|x S240.

### (II) Characterization of conductivity and density.

### 1. Ionic conductivity test of the material of each structural layer

Sample preparation: a battery was disassembled, and a structural layer sample to be tested was extracted and ground into uniform powder.

Method: an ionic conductivity was measured by an alternating current impedance spectroscopy (EIS) analysis method. The detailed procedure was as follows. Powder to be tested was poured into a tableting mold with a diameter of 10 mm. The powder was compressed at 360 MPa to form a dense film. Then, the film was sandwiched by a columnar stainless steel current collector with a diameter of 10 mm at 120 MPa in the mold. The current collector was then connected to an electrochemical workstation, and the film was subjected to electrochemical impedance test (EIS) at a bias voltage of 10 mV and a frequency range of 10⁶ Hz to 10 Hz. In electrochemical impedance spectroscopy, the intersection point of a curve with a Z' axis from a high-frequency region to a low-frequency region was denoted as a resistance value R, and an ionic conductivity could be calculated through formula (1):
$σ = \frac{1}{R} ⋅ \frac{d}{A}$ (1)

where d was the thickness of the film, and A was the contact area between the film and the current collector.

Based on the ionic conductivity test results of the materials of the structural layers and the conductivity test results of the structural layers tested by using the EIS method, the comparison results of the relative magnitudes of the electrical conductivities of the structural layers were consistent.

### 2. Characterization of the density of a structural layer formed based on an etched substrate

The density parameter K_{E} of each structural layer was detected and analyzed using a true density tester (such as G-DenPyc 3900M).

### (III) Electrochemical performance of an all-solid-state battery tested by using a solid-state mold battery with a voltage window of 2.8 V to 4.3 V (vs. Li⁺/Li)

### 1. Initial discharge capacity

A test process was as follows. An assembled all-solid-state battery was charged to 3.68 V (vs. Li⁺/Li at 4.3 V) at a current density of 0.1C, rested for 10 min, and then discharged to 1.98 V (vs. Li⁺/Li at 2.6 V) at a current density of 0.1C to obtain the initial first discharge capacity of the battery. The battery was tested at 25 ± 3°C, where 1C = 200 mA/g.

### 2. Initial coulomb efficiency

The initial coulomb efficiency of the battery could be obtained by dividing an initial discharge capacity measured at 0.1C by an initial charge capacity.

### 3. Rate performance

A test process was as follows. The charging rate of the all-solid-state battery was fixed to 0.1C, and then the all-solid-state battery was separately discharged at rates of 0.1C, 0.33C, 1C, 2C and 3C, with 3 cycles for each rate. The voltage test window of the battery was 2.8 V to 4.3 V vs. Li⁺/Li. The battery was tested at 25 ± 3°C, where 1C = 200 mA/g.

### 4. Cycle performance

A test process was as follows. The assembled all-solid-state battery was first activated by charging and discharging at 0.1C for 3 cycles, and then subjected to a long-term cycle test by charging and discharging at 0.33C for 200 cycles. The cycle capacity retention rate of the battery was calculated. The voltage test window of the battery was 2.8 V to 4.3 V vs. Li⁺/Li (vs. Li⁺/Li, the active ion was Li⁺), and the battery was tested at 25 ± 3°C., where 1C = 200 mA/g.

The test results could be seen in Table 2 under "capacity retention rate after 200 cycles, 0.33C".

### 5. Direct current resistance DCR of battery

DCR test: At 25°C, a battery was charged at a constant current of 1/3C to 3.65 V, then charged at a constant voltage of 3.65 V to a current of 0.05C, rested for 5 min, and then discharged at 1/3C for 90 min. A voltage V1 was recorded after the battery was rested for 120 min. The battery was then discharged at 4C for 30s, and a voltage V2 was recorded, such that the direct current resistance DCR of the battery was obtained based on (V2-V1)/4C.

The test results could be seen in Table 2 under "Direct current resistance DCR of battery".

### Test and analysis results:

According to cross-sectional morphology analysis, compared with Comparative Examples 1 to 4 without the interface functional layer, each of Examples 1 to 15 was provided with the interface functional layer, and thereby had significantly improved cycle performance. In addition, the direct current resistance of the battery was also significantly reduced.

The negative electrode interface functional layer was formed in each of Examples 1 to 9, 14, and 15. The positive electrode interface functional layer was formed in each of Examples 10, 11, and 12. The positive electrode interface functional layer and the negative electrode interface functional layer were simultaneously formed in Example 13.

According to the FIB-SEM combined with EDS test results, the organic component content of the interface functional layer was lower than that of the adjacent electrode layer in each of Examples 1 to 11. The organic component content of the interface functional layer was lower than that of the solid electrolyte layer in each of Examples 12 and 13. The organic component content of the negative electrode interface functional layer was lower than that of the negative electrode layer in Example 13. The intermediate functional layer (serving as the negative electrode interface functional layer) in Examples 14 and 15 had a lower organic component content than the adjacent negative electrode layer according to feeding amounts.

According to the battery performance test results, compared with the comparative examples without the interface functional layer, each example, in which the interface functional layer was introduced, further improved the discharge capacity, initial coulomb efficiency and rate performance of the solid-state battery. For example, comparative data of Example 1 and Comparative Example 1 therein were listed in Table 3.

Examples 1 to 13 were formed using an in-situ method. In each example, a portion of the interface functional layer became an extension region of the adjacent electrode active material layer, and another portion of the interface functional layer became an extension region of the solid electrolyte layer. Compared with Comparative Example 1, the Examples 1 to 13 had significantly improved cycle performance and significantly reduced direct current resistance of the battery.

Examples 1 to 13 were formed using the in-situ method. In each example, a staggered mating interface, including a first sublayer on one side of an electrode layer and a second sublayer on one side of a solid electrolyte film, was provided in the interface functional layer. Further, the staggered mating interface was provided between the first sublayer and the second sublayer, such that one portion of the interface functional layer became the extension region of the adjacent electrode active material layer, and another portion of the interface functional layer became the extension region of the solid electrolyte layer.

According to the test results of the powder samples of each structural layer obtained by disassembling the battery, the ionic conductivity of the material of the interface functional layer in each of Examples 1 to 13 was higher than that of the material of the adjacent electrode layer and higher than that of the material of the solid electrolyte layer. Accordingly, the conductivity of the interface functional layer in each of Examples 1 to 13 was higher than that of the adjacent electrode layer and higher than that of the solid electrolyte layer.

According to the density test results, the density of the solid electrolyte layer in each of Examples 1 to 9 was higher than the density of the solid electrolyte layer in Comparative Example 1. The density of the solid electrolyte layer in each of Examples 10 and 11 was higher than the density of the solid electrolyte layer in Comparative Example 2. The density of the positive electrode layer in Example 12 was higher than the density of the positive electrode layer in Comparative Example 3. The densities of the positive electrode layer and the negative electrode layer in Example 13 were respectively higher than the densities of the positive electrode layer and the negative electrode layer in Comparative Example 4. The density of the solid electrolyte layer in each of Examples 1 to 8 and 10 was ≥ 97%. The density of the solid electrolyte layer in Example 9 was about 92%. The density of the solid electrolyte layer in Example 11 was about 94%. In each of Comparative Examples 1 and 10, the density of the solid electrolyte layer was less than 90%. The density of the positive electrode layer in Comparative Example 3 was less than 90%. In Comparative Example 4, the densities of the positive electrode layer and the negative electrode layer were both less than 90%.

**Table 2.**

| No. | Etching parameters | | | Interface functional layer depth | | Battery Performance | |
|---|---|---|---|---|---|---|---|
| | Etching method | ICP etching power (kW) | Etching depth (µm) | Interface functional layer type | Interface functional layer thickness | Relative percentage of direct current resistance DCR of battery (relative to Comparative Example 1) | Capacity retention ratio after 200 cycles, 0.33C |
| Example 1 | Plasma treatment | 5 | 13 | Negative electrode interface functional layer | About 12 µm | 81% | 80.2% |
| Example 2 | Laser treatment | 5 | 16 | Negative electrode interface functional layer | About 16 µm | 78% | 88.2% |
| Example 3 | Plasma treatment | 5 | 13 | Negative electrode interface functional layer | About 13 µm | 79% | 87.1% |
| Example 4 | Plasma treatment | 5 | 12 | Negative electrode interface functional layer | About 12 µm | 88% | 81.2% |
| Example 5 | Plasma treatment | 5 | 13 | Negative electrode interface functional layer | About 13 µm | 86% | 83.1% |
| Example 6 | Plasma treatment | 5 | 20 | Negative electrode interface functional layer | About 19 µm | 78% | 88.9% |
| Example 7 | Plasma treatment | 3 | 7 | Negative electrode interface functional layer | About 7 µm | 83% | 84.2% |
| Example 8 | Plasma treatment | 5 | 4 | Negative electrode interface functional layer | About 3 µm | 86% | 81.2% |
| Example 9 | Plasma treatment | 5 | About 1.5 | Negative electrode interface functional layer | About 1.4 µm | 88% | 80.7% |
| No. | Etching method | ICP etching power (kW) | Etching depth (µm) | Interface functional layer thickness | | / | / |
| Example 10 | Plasma treatment | 8 | 15 | Positive electrode interface functional layer | About 15 µm | 85% | 85.6% |
| Example 11 | Plasma treatment | 8 | 44 | Positive electrode interface functional layer | About 44 µm | 82% | 87.5% |
| Example 12 | Plasma treatment | 5 | 13 | Positive electrode interface functional layer | About 13 µm | 87% | 82.7% |
| Example 13 | Plasma treatment | 3 | About 5 | Positive electrode interface functional layer | About 5 µm | 92% | 80.1% |
| | Plasma treatment | 3 | About 5 | Negative electrode interface functional layer | About 5 µm | 92% | 80.1% |
| Example 14 | / | / | / | The thickness of the intermediate functional layer is about 12 µm | | 90% | 80.1% |
| Example 15 | / | / | / | The thickness of the intermediate functional layer is about 12 µm | | 91% | 80.4% |
| Comparative Example 1 | / | / | / | / | / | 100% | 76.9% |
| Comparative Example 2 | / | / | / | / | / | About 100% | 76.5% |
| Comparative Example 3 | / | / | / | / | / | About 100% | 77.3% |
| Comparative Example 4 | / | / | / | / | / | About 100% | 76.8% |

In Table 2, the direct current resistance DCR test results of the batteries in Examples 1 to 14 and Comparative Examples 1 to 4 are all percentages relative to the test result in Comparative Example 1.

**Table 3.**

| No. | Percentage increase in battery performance | | | | | |
|---|---|---|---|---|---|---|
| | 0.1C specific discharge capacity | Initial coulomb efficiency | 0.33C specific discharge capacity | 1C specific discharge capacity | 2C specific discharge capacity | 3C specific discharge capacity |
| Example 1 | 104.0% | 107.0% | 111.3% | 116.8% | 118.3% | 120.2% |
| Comparative Example 1 | 100% | 100% | 100% | 100% | 100% | 100% |

In Table 3, taking the test data of Comparative Example 1 as 100%, Example 1 is the percentage relative to the test data of Comparative Example 1.

The foregoing descriptions of the various implementations and embodiments tend to emphasize differences between the various implementations and embodiments. For same or similar parts thereof, reference can be made to these implementations and embodiments. For brevity, details are not described herein again. The technical features of the implementations and embodiments described above may be combined, and all possible combinations of the technical features in the foregoing embodiments are not described for concise description. However, it should be regarded that the combinations of these technical features are within the range described in the present description as long as there is no inconsistency.

It should be noted that the present application is not limited to the above-described embodiments and examples. The foregoing implementations and embodiments are merely examples, and any implementation and embodiment having substantially the same configuration as the technical concept and exhibiting the same operation and effect within the scope of the technical solutions of the present application is included in the technical scope of the present application. The implementations and embodiments described above merely illustrate several implementations and embodiments of the present application, which are described in detail, but are not to be construed as limiting the scope of the patent. Furthermore, without departing from the gist of the present application, various modifications that can be conceived by those skilled in the art to the implementations or embodiments, and other modes constructed by combining some constituent elements of the implementations or embodiments, are also included within the scope of the present application.

## Claims

1. A solid-state battery, comprising a solid electrolyte layer and two electrode layers which are located on two sides of the solid electrolyte layer, wherein one electrode layer is a positive electrode layer and the other electrode layer is a negative electrode layer; the positive electrode layer comprises a positive electrode active material layer, and the negative electrode layer comprises a negative electrode active material layer;
an interface functional layer is provided between the solid electrolyte layer and at least one of the electrode layers; the interface functional layer between the positive electrode layer and the solid electrolyte layer is a positive electrode interface functional layer, and the interface functional layer between the negative electrode layer and the solid electrolyte layer is a negative electrode interface functional layer;
the mass percentage of an organic component in the positive electrode interface functional layer is denoted as fₘ₁; the mass percentage of an organic component in the negative electrode interface functional layer is denoted as fₘ₂; the mass percentage of an organic component in the positive electrode active material layer is denoted as f_{mP}; the mass percentage of an organic component in the negative electrode active material layer is denoted as f_{mN}; and the mass percentage of an organic component in the solid electrolyte layer is denoted as f_{mE},
wherein
when the positive electrode interface functional layer is present, fₘ₁ is less than at least one of f_{mP} and f_{mE}, and
when the negative electrode interface functional layer is present, fₘ₂ is less than at least one of f_{mN} and f_{mE}.

2. The solid-state battery according to claim 1, wherein the organic component comprises one or more of an organic binder and an organic dispersant;
the organic binder comprises one or more of polyvinylidene fluoride, styrene-butadiene rubber emulsion, carboxymethyl cellulose, sodium carboxymethyl cellulose, sodium alginate, polyvinyl alcohol, polymethylmethacrylate, hydrogenated nitrile rubber, polytetrafluoroethylene, and polyacrylic acid;
the organic dispersant comprises one or more of a cationic wetting dispersant, an anionic wetting dispersant, and an amphoteric wetting dispersant; the cationic wetting dispersant comprises one or more of an amine salt, a quaternary ammonium salt, and a pyridinium salt; the anionic wetting dispersant comprises one or more of a fatty acid salt, a sulfate ester salt, and sulfonate; and the amphoteric wetting dispersant comprises a phosphate ester salt-type high-molecular polymer.

3. The solid-state battery according to claim 1 or 2, wherein the thickness of any interface functional layer is less than or equal to 50 µm.

4. The solid-state battery according to claim 3, wherein the thickness of any interface functional layer is 1 µm to 50 µm.

5. The solid-state battery according to any one of claims 1 to 4, wherein the solid-state battery satisfies one or two of the following features:
the positive electrode interface functional layer is present, fₘ₁ < f_{mP} and fₘ₁ < f_{mE}; and
the negative electrode interface functional layer is present, fₘ₂ < f_{mN} and fₘ₂ < f_{mE}.

6. The solid-state battery according to any one of claims 1-4, wherein the conductivity of the positive electrode interface functional layer is denoted as σ₁; the conductivity of the negative electrode interface functional layer is denoted as σ₂; the conductivity of the positive electrode active material layer is denoted as σ_{P}; the conductivity of the negative electrode active material layer is denoted as σ_{N}; the conductivity of the solid electrolyte layer is denoted as σ_{E}, and
the solid-state battery satisfies one or more of the following features:
the positive electrode interface functional layer is present, and σ₁ is greater than at least one of σ_{P} and σ_{E}, optionally, when σ₁ > σ_{P}, fₘ₁ < f_{mP}, and when σ₁ > σ_{E}, fₘ₁ < f_{mE}; and
the negative electrode interface functional layer is present, and σ₂ is greater than at least one of σ_{N} and σ_{E}, optionally, when σ₂ > σ_{N}, fₘ₂ < _{fmN}, and when σ₂ > σ_{E}, fₘ₂ < f_{mE}.

7. The solid-state battery according to claim 6, wherein the solid-state battery satisfies one or more of the following features:
the positive electrode interface functional layer is present, σ₁ > σ_{P} and fₘ₁ < f_{mP}, or σ₁ > σ_{E} and fₘ₁ < f_{mE};
the negative electrode interface functional layer is present, σ₂ > σ_{N} and fₘ₂ < _{fmN}, or σ₂ > σ_{E} and fₘ₂ < f_{mE};
the positive electrode interface functional layer is present, fₘ₁ < f_{mP}, fₘ₁ < f_{mE}, σ₁ > σ_{P}, and σ₁ > σ_{E}; and
the negative electrode interface functional layer is present, fₘ₂ < _{fmN}, fₘ₂ < f_{mE}, σ₂ > σ_{N}, and σ₂ > σ_{E}.

8. The solid-state battery according to any one of claims 1 to 7, wherein the interface functional layer satisfies one or two of the following features:
at least a portion of the interface functional layer is an extension region of the adjacent electrode active material layer;
and
at least a portion of the interface functional layer is an extension region of the solid electrolyte layer.

9. The solid-state battery according to any one of claims 1 to 8, wherein the interface functional layer comprises an interface layer active substance of the same type as an electrode active substance in the adjacent electrode layer, and further comprises an interface layer electrolyte material of the same type as a solid electrolyte material in the solid electrolyte layer.

10. The solid-state battery according to any one of claims 1 to 9, wherein a staggered mating interface is provided in the interface functional layer.

11. The solid-state battery according to any one of claims 1 to 10, wherein any interface functional layer independently comprises a first sublayer and a second sublayer, and the second sublayer is located between the first sublayer and the solid electrolyte layer;
the first sublayer and the adjacent electrode layer comprise the same type of electrode active substance; and
the second sublayer and the solid electrolyte layer comprise the same type of solid electrolyte material.

12. The solid-state battery according to claim 11, wherein the mass proportion of the electrode active substance in the first sublayer is higher than the mass proportion of the electrode active substance in the second sublayer, and the mass proportion of the solid electrolyte material in the second sublayer is higher than the mass proportion of the solid electrolyte material in the first sublayer.

13. The solid-state battery according to claim 11 or 12, wherein a staggered mating interface is provided between the first sublayer and the second sublayer.

14. The solid-state battery according to any one of claims 1 to 13, wherein at least one of the positive electrode active material layer and the negative electrode active material layer comprises an organic component;
the density of the solid electrolyte layer is denoted as K_{E}, satisfying K_{E} ≥ 90%.

15. The solid-state battery according to claim 14, wherein K_{E} ≥ 97%.

16. The solid-state battery according to any one of claims 1 to 15, wherein the solid electrolyte layer comprises an organic component, and the solid-state battery satisfies at least one of the following features:
(b1) the density of the positive electrode active material layer is denoted as K_{P}, satisfying K_{P} ≥ 90%; and
(b2) the density of the negative electrode active material layer is denoted as K_{N}, satisfying K_{N} ≥ 90%.

17. The solid-state battery according to claim 16, wherein the solid-state battery satisfies at least one of the following features: ${K}_{P} \geq 97 % ;$ and ${K}_{N} \geq 97 % .$

18. The solid-state battery according to any one of claims 1 to 17, wherein the solid-state battery is an all-solid-state battery.

19. A preparation method for a solid-state battery, comprising the following steps:
performing etching treatment on an initial negative electrode active layer located on at least one side surface of a negative electrode sheet to form a negative electrode rough surface having negative electrode concave portions, the negative electrode sheet after the etching treatment comprising negative electrode convex portions corresponding to the negative electrode concave portions, wherein the initial negative electrode active layer comprises a degradable organic component, and after the etching treatment, the content of the degradable organic component in the negative electrode convex portion decreases;
providing an electrolyte pre-coating layer on the negative electrode rough surface, and compressing the electrolyte pre-coating layer, thereby allowing the negative electrode convex portions and the portions of the electrolyte pre-coating layer filled in the corresponding negative electrode concave portions to jointly form a negative electrode interface functional layer, and allowing the remaining portion of the electrolyte pre-coating layer to form a solid electrolyte layer; and
forming a positive electrode layer on one side surface that is of the solid electrolyte layer and that is away from the negative electrode interface functional layer.

20. The preparation method for a solid-state battery according to claim 19, wherein the density of the solid electrolyte layer is denoted as K_{E}, satisfying K_{E} ≥ 90%, and an etching depth of 1 µm to 50 µm.

21. The preparation method for a solid-state battery according to claim 20, wherein K_{E} ≥ 97%, and the etching depth is 3 µm to 40 µm.

22. A preparation method for a solid-state battery, comprising the following steps:
performing etching treatment on an initial positive electrode active layer located on at least one side surface of a positive electrode sheet to form a positive electrode rough surface having positive electrode concave portions, the positive electrode sheet after the etching treatment comprising positive electrode convex portions corresponding to the positive electrode concave portions, wherein the initial positive electrode active layer comprises a degradable organic component, and after the etching treatment, the content of the degradable organic component in the positive electrode convex portion decreases;
providing an electrolyte pre-coating layer on the positive electrode rough surface, and compressing the electrolyte pre-coating layer, thereby allowing the positive electrode convex portions and the portions of the electrolyte pre-coating layer filled in the corresponding positive electrode concave portions to jointly form a positive electrode interface functional layer, and allowing the remaining portion of the electrolyte pre-coating layer to form a solid electrolyte layer; and
forming a negative electrode layer on one side surface that is of the solid electrolyte layer and that is away from the positive electrode interface functional layer.

23. The preparation method for a solid-state battery according to claim 22, wherein K_{E} ≥ 90%, and an etching depth is 1 µm to 50 µm.

24. The preparation method for a solid-state battery according to claim 23, wherein K_{E} ≥ 97%, and the etching depth is 3 µm to 40 µm.

25. A preparation method for a solid-state battery, comprising the following steps:
providing a solid electrolyte film comprising a first surface and a second surface facing away from each other, wherein the solid electrolyte film comprises a degradable organic component;
performing etching treatment on the first surface of the solid electrolyte film to form a first rough surface having first concave portions, the solid electrolyte film after the etching treatment comprising first convex portions corresponding to the first concave portions, and after the etching treatment, the content of the degradable organic component in the first convex portion decreasing;
providing a first electrode pre-coating layer on the first surface of the solid electrolyte film after the etching treatment, and compressing the first electrode pre-coating layer, thereby allowing the first convex portions and the portions of the first electrode pre-coating layer filled in the corresponding first concave portions to jointly form a first interface functional layer, and allowing the remaining portion of the first electrode pre-coating layer to form a first electrode layer; and
forming a second electrode layer on the second surface of the solid electrolyte film.

26. The preparation method for a solid-state battery according to claim 25, wherein forming the second electrode layer on the second surface of the solid electrolyte film comprises:
performing etching treatment on the second surface of the solid electrolyte film to form a second rough surface having second concave portions, the solid electrolyte film after the etching treatment comprising second convex portions corresponding to the second concave portions, and after the etching treatment, the content of the degradable organic component in the second convex portion decreasing; and
providing a second electrode pre-coating layer on the second surface of the solid electrolyte film after the etching treatment, and compressing the second electrode pre-coating layer, thereby allowing the second convex portions and the portions of the second electrode pre-coating layer filled in the corresponding second concave portions to jointly form a second interface functional layer, and allowing the remaining portion of the second electrode pre-coating layer to form the second electrode layer.

27. The preparation method for a solid-state battery according to claim 25 or 26, wherein the first electrode layer is a positive electrode layer, or the first electrode layer is a negative electrode layer.

28. The preparation method for a solid-state battery according to claim 27, wherein before the positive electrode layer is formed, etching treatment is performed on one side surface that is of the solid electrolyte film and that is close to the positive electrode layer; and the density of the positive electrode layer is denoted as K_{P}, satisfying K_{P} ≥ 90%, and an etching depth is 1 µm to 50 µm.

29. The preparation method for a solid-state battery according to claim 28, wherein K_{P} ≥ 97%, and the etching depth is 3 µm to 40 µm.

30. The preparation method for a solid-state battery according to claim 27, wherein before the negative electrode layer is formed, etching treatment is performed on one side surface that is of the solid electrolyte film and that is close to the negative electrode layer; and the density of the negative electrode layer is denoted as K_{N}, satisfying K_{N} ≥ 90%, and an etching depth is 1 µm to 50 µm.

31. The preparation method for a solid-state battery according to claim 30, wherein K_{N} ≥ 97%, and the etching depth is 3 µm to 40 µm.

32. The preparation method for a solid-state battery according to any one of claims 19 to 31, wherein etching manners for the etching treatment comprise one or more of plasma treatment and laser treatment.

33. An electrical device, comprising at least one of the solid-state battery according to any one of claims 1 to 18, and the solid-state battery prepared by the preparation method for a solid-state battery according to any one of claims 19 to 32.
